(19) Europäisches Patentamt
European Patent Office
Office européen des brevets

(11) EP 1 142 954 A1

(12) # EUROPEAN PATENT APPLICATION
published in accordance with Art. 158(3) EPC

(43) Date of publication:
**10.10.2001 Bulletin 2001/41**

(21) Application number: **99970409.1**

(22) Date of filing: **12.10.1999**

(51) Int Cl.[7]: **C08L 67/00**, C08G 63/78, C08G 64/20, C08K 3/34, C08L 69/00

(86) International application number:
**PCT/JP99/05627**

(87) International publication number:
**WO 00/22042 (20.04.2000 Gazette 2000/16)**

(84) Designated Contracting States:
**AT BE CH CY DE DK ES FI FR GB GR IE IT LI LU MC NL PT SE**

(30) Priority: **12.10.1998 JP 28901698**
**24.11.1998 JP 33295198**
**18.03.1999 JP 7322599**
**27.04.1999 JP 11907599**

(71) Applicant: **Kaneka Corporation**
**Osaka-shi, Osaka 530-0005 (JP)**

(72) Inventors:
- **SUZUKI, Noriyuki**
  **Osaka 566-0072 (JP)**
- **NOMA, Tomoya**
  **Osaka 566-0072 (JP)**
- **KOUROGI, Mitsuharu**
  **Osaka 566-0072 (JP)**

(74) Representative: **VOSSIUS & PARTNER**
**Siebertstrasse 4**
**81675 München (DE)**

(54) **RESIN COMPOSITIONS AND PROCESS FOR PRODUCING THE SAME**

(57) Resin compositions containing polycarbonate, polyarylate or a thermoplastic polyester resin with a silane-treated foliated phyllosilicate. The silane-treated foliated phyllosilicate is prepared by introducing into a swellable silicate a silane compound represented by the following general formula (1):

$$Y_nSiX_{4-n},$$

wherein n is an integer of 0 to 3; Y is optionally substituted $C_{1-25}$ hydrocarbon group; and X is a hydrolyzable group or hydroxy, provided that n Y's and (4-n) X's are the same or different. These resin compositions satisfy at least one of the following conditions: (a) the silane-treated foliated phyllosilicate has an average layer thickness of 500 Å or less; and (b) the [N] value is 30 or more and the average aspect ratio is from 10 to 300. In case of polyester resin compositions, definite conditions on rheological properties represented by $\eta_e$-3η, $\Delta\eta_e$ and $J_{e0}\eta_0$ are to be satisfied too.

EP 1 142 954 A1

## Description

TECHNICAL FIELD

The present invention relates to a resin composition including polycarbonate resin, polyarylate resin, or thermoplastic polyester resin and silane-treated foliated phyllosilicate, and a method for producing the resin composition.

BACKGROUND ART

Polycarbonate resin has a good transparency, shock resistance, dimensional accuracy, and heat resistance, and therefore it is widely used in fields of precision machine parts, automobile parts, office automation apparatus parts, and the like. Polyarylate resin has a good heat resistance, transparency, shock resistance, dimensional accuracy, and weather resistance, and therefore it is widely used in fields of electric/electronics parts, precision machine parts, automobile parts, materials for food/medicine, and the like. Thermoplastic polyester resin such as polyethylene terephthalate has a good heat resistance, chemical resistance, weather resistance, mechanical properties, electric characteristics, etc., and therefore it is widely used as a form of, for example, fiber or film in fields of electric/electronics parts, mechanical parts, office automation apparatus parts, electric home appliance parts and the like. All of these resins are being required to have further improved mechanical properties, heat resistance, and the like. For example, the polyarylate resin used for precision machine parts for cameras, watches, etc., is required to have a high level of stiffness, dimensional accuracy, low warpage characteristic, and surface smoothness.

In the light of the above, a variety of fillers, e.g., a fiber-like inorganic substance such as glass fiber, carbon fiber or potassium titanate whisker, or a particle-like inorganic substance such as glass flake, glass bead, talc, mica, or kaolin, etc., has been mixed in the resins. Although mixing inorganic materials certainly improves the mechanical properties, etc. of the resins, it causes a problem of damaging the external appearance of the surface of molded products and increasing the relative density. Furthermore, there was a problem that the orientation of fiber-like inorganic substances causes anisotropy during the injection molding. In addition, for polycarbonate resin and polyarylate resin, there was a problem of damaging the transparency which is a significant feature of these resins.

It has generally been considered that these problems, which may be caused by adding fiber-like inorganic substances or particle-like inorganic substances, result from insufficient dispersion of the inorganic substance and an excessive size of dispersed particles.

Regarding micro-dispersion techniques of inorganic fillers into resins, a variety of techniques are disclosed as follows: (1) a resin composite material including a resin matrix and laminar particles with an average layer thickness of about 50 Å or less and the maximum layer thickness of about 100 Å or less to which an organic metal compound such as an organo-silane compound is bound (International Publication WO95/06090, US Patent No. 5,514,734, International Publication WO93/04118, and International Publication WO93/11190); (2) a resin composition in which laminar silicate with an average layer thickness of 25 to 1000 Å and an aspect ratio of 20 to 300 is dispersed in a thermoplastic resin (Japanese Laid-open Publication No. 9-124836; (3) a method for polymerizing a thermoplastic polyester resin after applying a swelling treatment with glycols to a laminar inorganic filler having a layer charge of 0.2 to 1.0 (Japanese Laid-open Publication No. 7-26123); (4) a method for polymerizing a thermoplastic polyester resin after applying a swelling treatment with glycols to an inorganic compound (e.g., swellable fluorine mica) obtained by heating a mixture of talc and alkali silicofluoride (Japanese Laid-open Publication No. 7-268188 and Japanese Laid-open Publication No. 8-73710); (5) a method for polymerizing a thermoplastic polyester resin in an presence of compatibilizing agent and laminar silicate denaturalized with organic onium ion (Japanese Laid-open Publication No. 3-62846); and (6) a method for mixing swellable fluorine mica and proton acid in an arbitrary stage during the polymerizing reaction of a thermoplastic polyester resin (Japanese Laid-open Publication No. 8-120071); and (7) a method for continuously adding a slurry containing 0.1 to 10% by weight of particles having an average grain size of 200 nm or less when a thermoplastic polyester resin is polymerized (Japanese Laid-open Publication No. 9-328538).

The above technique (1) provides a nylon 6 type composite material which consists of nylon 6 and montmorillonite bound with isocyanatepropyl triethoxysilane, etc., copolymerized with caprolactam. It is difficult, however, to obtain a resin composite material in which laminar particles are micro-dispersed, by directly applying this method using nylon 6 to polycarbonate resin, polyarylate resin or a thermoplastic polyester resin. The above technique (2) uses swellable mica as the laminar silicate, wherein swellable mica swollen with water or alkylammonium-processed swellable mica swollen with xylene is biaxially extruded with polybutyleneterephthalate, etc., whereby a resin composition is obtained. It is difficult, however, to obtain a resin composition having desired properties if this method is directly applied to polyarylate resin or the like, since the micro-dispersion of the laminar silicate is incomplete and heterogeneous. According to each of the above techniques (3) to (7), the micro-dispersion of the laminar silicate in thermoplastic polyester resin is insufficient and therefore it is difficult to obtain a resin composition having desired properties.

In addition to the above problems, for the thermoplastic polyester resin, there has been a problem, in the case

where a polyester resin, etc., having a repeating unit of polyalkyleneterephthalate as the fundamental framework is used as a molding material, of the industrial application of the resin being limited since the crystallization rate of the resin is small. For example, if a resin is molded in a common manner in a mold at 100°C or lower, the dimensional stability is significantly deteriorated due to a bad releasability, e.g., the surface quality (surface smoothness) of the molded product is lowered. In addition, it is necessary to extend the retention time in the mold, which results in extending the duration of the molding cycle.

As measures for solving such a problem of crystallization rate, the techniques of adding the following substances as a nucleating agent for crystallization to thermoplastic polyester resin are disclosed: (i) inorganic additives such as talc, mica, silica (Japanese Patent Publication for Opposition No. 46-38707 and Japanese Patent Publication for Opposition No. 47-27142); (ii) copolymer of $\alpha$-olefin and unsaturated carboxylate (Japanese Patent Publication for Opposition No. 45-26225); and (iii) organic carboxylate such as sodium benzoate (Japanese Patent Publication for Opposition No. 46-29977 and Japanese Laid-open Publication No. 54-158452).

The effects by the above techniques (i) to (iii), i.e., mere addition of nucleating agents for crystallization, are significantly affected by the molding conditions such as the cooling time after filling the resin into the mold and the mold temperature, or the shape of the molded product. Therefore, the crystallization may not sufficiently occur due to these conditions, and sufficient effects cannot be achieved. Furthermore, respective problems arise with each technique: according to the technique (i), it is necessary to add a large quantity of inorganic additives, which causes the decrease of strength, deterioration of color tone or the decrease of surface quality, etc., of the obtained molded product; according to the technique (ii), the decrease of modulus of elasticity occurs; and according to the technique (iii), the decrease of the mechanical properties occurs due to the decrease of the molecular weight of the resin.

The inventors of the present invention obtained a composite material by introducing laminar particles into polycarbonate and polyarylate resins as a very thin plate-like structure close to the unit layer (the layer thickness of the unit layer is about 10 Å), and performed the evaluation of the physical properties of the composite materials. As a result, it was found that in these composite materials, the mechanical properties and deflection temperature under load were improved compared to the material in which laminar particles were introduced into resin merely as a laminated/aggregated state by using a method such as extrusion, fusion, or kneading. However, it was found that the effects were by no means satisfactory.

This result conforms to the following suggestion in Japanese Laid-open Publication 9-118792. That is, in the case where the laminar particles are separated one by one and dispersed in a form of a molecule in a polypropylene type resin and a vinyl type polymer, the laminar particles form a laminated structure and are not likely to express the isotropic properties (Nendo Kagaku, vol. 30(2), 143-147 (1990)). Furthermore, laminar particles *per se* naturally have a high modulus of elasticity, and if they are separated so as to be in a state close to the unit layer, they are distorted and cannot provide a normally expected modulus of elasticity.

As described above, by merely dispersing the laminar silicate in a resin matrix so that the laminar silicate has an average layer thickness of about 50 Å or less and the maximum layer thickness of about 100 Å or less, which is a state close to the unit layer, or by introducing the laminar silicate into the resin matrix merely in a laminated/aggregated state, it is difficult to obtain, by either method, a resin composition having sufficiently improved properties. Therefore, techniques have been sought for dispersing laminar particles having an appropriate layer thickness in resin composition so as to provide the resin composition with a variety of positive properties. An object of the present invention is to provide such techniques.

Regarding thermoplastic polyester resin, the inventors of the present invention disclosed in International Publication WO97/43343, a technique of utilizing a silane-treated foliated phyllosilicate in which an organo-silane compound is introduced into layered swellable silicate. By polymerizing diol slurry containing the clay composite and a diol compound such as bishydroxyalkylterephthalate as essential components, the laminar particles are micro-dispersed in the thermoplastic polyester resin, thereby providing a polyester resin composition with an improved mechanical properties, and so on. However, the preparation of the above diol slurry requires significant time and effort, and therefore imposes a problem which causes a high cost, and therefore improvements have been sought. Another object of the present invention is to solve such a conventional problem.

Regarding thermoplastic polyester resins, there is also the problem of crystallization rate as described above, and therefore techniques for improvements in the moldability such as releasability and the molding cycle of thermoplastic polyester resins regardless of the molding conditions and the shape of the product have been sought. A further object of the present invention is to solve such a conventional problem.

DISCLOSURE OF THE INVENTION

In order to achieve the above objects, the inventors of the present invention have conducted diligent studies. As a result, they found that a significantly improved resin composition can be obtained by preparing a silane-treated foliated phyllosilicate by introducing an organo-silane compound into a swellable silicate which was separated and

exfoliated so as to have an appropriate layer thickness, and homogeneously dispersing the silane-treated foliated phyllosilicate into the resin, in a state in which the silane-treated foliated phyllosilicate is fractionated as a submicroscopic thin plate-shape, thereby completing the present invention.

The composition provided by the present invention is a resin composition comprising: a resin and a silane-treated foliated phyllosilicate, wherein the resin is selected from the group consisting of polycarbonate, polyarylate, and thermoplastic polyester, and the silane-treated foliated phyllosilicate is prepared by introducing an organo-silane compound represented by a general formula (1):

$$Y_nSiX_{4-n} \quad (1)$$

(where n is an integer from 0 to 3; Y is a hydrocarbon group with 1 to 25 carbons; the hydrocarbon group may have a substituent(s); X is a hydrolyzable group or hydroxyl group; n Ys may be the same type or different types; and (4-n) Xs may be the same type or different types) into a swellable silicate, and wherein at least one of the following conditions (a) and (b) is satisfied:

(a) an average layer thickness of the silane-treated foliated phyllosilicate is 500 Å or less; and
(b) [N] value is 30 or more (where the [N] value is defined as the number of particles per a unit weight ratio of the silane-treated foliated phyllosilicate contained in an area of 100 $\mu m^2$ of the resin composition) and an average aspect ratio is 10 to 300 (where the average aspect ratio is defined as an average of a ratio of a layer length to a layer thickness of the silane-treated foliated phyllosilicate),

and wherein in the case where the resin is a thermoplastic polyester, at least one of the following conditions (i) to (iii) is further satisfied:

(i) a difference ($\eta_e$-3$\eta$) between an extensional viscosity $\eta_e$ and the triple value of a shear viscosity $\eta$ of the resin composition is 300 Pa·s or more at a temperature of 280°C and a rate of strain of 100 (1/s);
(ii) between a rate of strain of 100 (1/s) and a rate of strain of 1000 (1/s), a difference ($\Delta\eta_e$) of values of the extensional viscosity $\eta_e$ of the resin composition at a temperature of 280°C is 500 Pa·s or more; and
(iii) a product $J_{e0}\eta_0$ of equilibrium compliance $J_{e0}$ and zero shear viscosity $\eta_0$ of the resin composition at a temperature of 280°C is 0.8 seconds or more.

In one embodiment, the above-described resin is polycarbonate.
In one embodiment, the above-described resin is polyarylate.
In one embodiment, the above-described resin is thermoplastic polyester.
In one embodiment, the polyester resin composition is a resin composition in which all the above-described conditions (i) to (iii) are satisfied.
In one embodiment, the average layer thickness of the above-described silane-treated foliated phyllosilicate is 500 Å or less and the maximum layer thickness is 2000 Å or less.
In one embodiment, when the average layer thickness of the above-described silane-treated foliated phyllosilicate is 500 Å or less and the maximum layer thickness is 2000 Å or less, the [N] value is 30 or more.
In one embodiment, when the average layer thickness of the above-described silane-treated foliated phyllosilicate is 500 Å or less and the maximum layer thickness is 2000 Å or less, the average aspect ratio is 10 to 300.
The method provided by the present invention is a method for producing the above-described resin composition, comprising the steps of:

(A) preparing a clay dispersion including the above-described silane-treated foliated phyllosilicate and a dispersion medium;
(B) mixing a polymerizable prepolymer and the clay dispersion; and
(C) forming the resin by polymerizing the polymerizable prepolymer,

wherein, in the case where the resin is a thermoplastic polyester, the clay dispersion comprises a dispersion medium containing water in the step (A).

In one embodiment, a basal spacing of the silane-treated foliated phyllosilicate in the clay dispersion prepared in the step (A) is the three times or more larger than the initial basal spacing of the above-described swellable silicate.
In one embodiment, the above-described resin composition is for an injection molding. The composition for injection molding is preferably a polyester resin composition.

## BEST MODE FOR CARRYING OUT THE INVENTION

Hereinafter, the present invention will be described in more detail.

### (Polycarbonate resin)

The polycarbonate resin used in the present invention is not specifically limited, and includes all of aliphatic, alicyclic, and aromatic polycarbonates. Among these, aromatic polycarbonates are preferable. An aromatic polycarbonate can be produced by the reaction between one or more bisphenols which may contain polyhydric phenols and carbonic acid esters such as bisalkylcarbonate, bisarylcarbonate, and phosgene.

Bisphenols include, specifically, bis(4-hydroxyphenyl)methane; 1,1-bis(4-hydroxyphenyl)ethane; 1,1-bis (4-hydroxyphenyl)propane; 2,2-bis(4-hydroxyphenyl)propane, i.e., bisphenol A; 2,2-bis(4-hydroxyphenyl)butane; 2,2-bis(4-hydroxyphenyl)pentane; 2,2-bis(4-hydroxyphenyl)-3-methylbutane; 2,2-bis(4-hydroxyphenyl)hexane; 2,2-bis(4-hydroxyphenyl)-4-methylpentane; 1,1-bis(4-hydroxyphenyl)cyclopentane, 1,1-bis(4-hydroxyphenyl)cyclohexane; bis(4-hydroxy-3-methylphenyl)methane; bis(4-hydroxy-3-methylphenyl)phenylmethane; 1,1-bis(4-hydroxy-3-methylphenyl)ethane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3-sec-butylphenyl)propane; bis(4-hydroxyphenyl) phenylmethane; 1,1-bis(4-hydroxyphenyl)-1-phenylethane; 1,1-bis(4-hydroxypheny)-1-phenylpropane; bis(4-hydroxyphenyl)diphenylmethane; bis(4-hydroxyphenyl)dibenzylmethane; 4,4'-dihydroxydiphenylether; 4,4'-dihydroxydiphenylsulfone; 4,4'-dihydroxydiphenylsulfide; 4,4'-dihydroxybenzophenone; phenolphthalein; and the like. The most typical phenol among these is bisphenol A.

Although there is no limitation to the method for producing the polycarbonate resin used for the present invention, the following methods are generally known: an interfacial polymerization method in which an alkali metal salt of bisphenols and a nucleophilic attack-active derivative of carbonic acid ester are used as raw material and they are subjected to a polycondensation reaction at the interface between an organic solvent dissolving the resultant polymer and alkali water; a pyridine method in which bisphenols and a nucleophilic attack-active derivative of carbonic acid ester are used as raw materials and they are subjected to a polycondensation reaction in an organic base such as pyridine; and a transesterification method in which bisphenols and a carbonic acid ester such as bisalkylcarbonate or bisarylcarbonate are used as raw materials and a polycarbonate is formed by transesterification reaction. Examples of the nucleophilic attack-active derivative of carbonic acid ester used in the interfacial polymerization method and the pyridine method include phosgene, carbodiimidazole, and the like, among which phosgene is the most commonly used since it is easy to obtain. Specific examples of carbonic acid esters used in the transesterification method include: dimethylcarbonate, diethylcarbonate, di-n-propylcarbonate, diisopropylcarbonate, and di-n-butylcarbonate, etc., as bis-alkylcarbonates; and diphenylcarbonate, bis(2,4-dichlorophenyl)carbonate, bis(2,4,6-trichlorophenyl)carbonate, bis(2-nitrophenyl)carbonate, bis(2-cyanophenyl)carbonate, bis(4-methylphenyl)carbonate, bis(3-methylphenyl)carbonate, dinaphthylcarbonate, etc., as bisarylcarbonates. Among these, dimethylcarbonate, diethylcarbonate, and diphenylcarbonate are most preferably used since their raw materials are easy to obtain and the reaction readily occurs. The above polycarbonate resins may be used alone or in a combination of two or more kinds having different compositions or components and/or different molecular weights.

Although there is no specific limitation to the molecular weight of the polycarbonate resins used in the present invention, the weight average molecular weight Mw measured at 40°C by gel permeation chromatography (GPC) with tetrahydrofuran (THF) solvent, for example, is typically 15,000 to 80,000, and preferably 30,000 to 70,000 in terms of monodisperse polystyrene. If Mw is less than 15,000, the mechanical properties and shock resistance of the molded product using the obtained composition tend to be reduced, and if Mw is more than 80,000, problems are likely to arise in the processing ability such as flowability during the molding.

### (Polyarylate Resin)

The polyarylate resin used in the present invention is a known polyarylate resin obtained by the reaction between an acid component whose essential components are an aromatic dicarboxylic acid compound and/or an ester-formable derivative of an aromatic dicarboxylic acid (hereinafter, referred to as an aromatic dicarboxylic acid component), and a diphenol component whose essential components are a diphenol compound and/or an ester-formable derivative of a diphenol compound (hereinafter, referred to as a diphenol component). Herein, an essential component means that the ratio of the component to the aromatic dicarboxylic acid or diphenol is 80% or more, and preferably 90% or more, the upper limit being 100%.

Examples of the above aromatic dicarboxylic acids include, for example, terephthalic acid; isophthalic acid; orthophthalic acid; 2,6-naphthalanedicarboxylic acid; 4,4'-biphenyldicarboxylic acid; 4,4'-diphenyletherdicarboxylic acid; 4,4'-diphenylmethanedicarboxylic acid; 4,4'-diphenylsulfonedicarboxylic acid; 4,4'-diphenylisopropylidenedicarboxylic acid, and the like. Substituted compounds thereof (e.g., an alkyl substituted compound of methylisophthalic acid) and derivatives thereof (e.g., acid halides such as terephthalic acid dichloride, isophthalic acid dichloride, 2,6-naphthalenedicarboxylic acid dichloride) can also be used. Oxyacids such as p-oxybenzoate and p-hydroxyethoxybenzoate, and ester-formable derivative thereof may also be used, and are included in the definition of aromatic dicarboxylic acid herein. Two or more kinds of these monomers may be mixed and used. One or more kinds of aliphatic dicarboxylic acids, such as adipic acid, azelaic acid, dodecanedioic acid, sebacic acid may be mixed and used with these aromatic dicarboxylic acids if they are used in a small amount which does not deteriorate the properties of the obtained polyarylate resin composition.

Among the above aromatic dicarboxylic acids, terephthalic acid, isophthalic acid, 2,6-naphthalenedicarboxylic acid, 4,4'-biphenyldicarboxylic acid, and ester-formable derivatives thereof are preferable because of their mechanical properties and easy obtainability.

On the other hand, the above diphenols are represented by bisphenol compounds represented by the general formula (2):

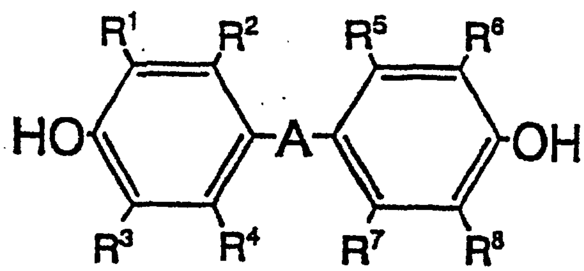

(2)

(wherein: -A- is -O-, -S-, -SO-, $-SO_2-$, -CO-, an alkylene group containing 1 to 20 carbons or an alkylidene group containing 6 to 20 carbons; $R^1$, $R^2$, $R^3$, $R^4$, $R^5$, $R^6$, $R^7$, and $R^8$ are either hydrogen atom, halogen atom, or monovalent hydrocarbon group containing 1 to 5 carbons; and $R^1$ to $R^8$ may be the same or different). Examples of the bisphenol compounds include 2,2-bis(4-hydroxyphenyl)propane ("bisphenol A"); bis(4-hydroxyphenyl)methane; 1,1-bis(4'-hydroxyphenyl)ethane; 1,1-bis(4-hydroxyphenyl)-3,3,5-trimethylcyclohexane ("bisphenol TMC"); bis(4-hydroxyphenyl) cyclohexylmethane; 2,2-bis(4'-hydroxy-3,5'-dibromophenyl)propane; bis(4-hydroxy-3,5-dichlorophenyl)methane; bis (4-hydroxy-3,5-dimethylphenyl)methane; 2,2-bis(4'-hydroxy-3',5'-dimethylphenyl)propane; 1,1-bis(4'-hydroxyphenyl)-1-phenylethane; 4,4'-dihydroxydiphenylether; bis(4-hydroxy-3,5-dimethylphenyl)ether; bis(4-hydroxyphenyl)sulfone; bis(4-hydroxy-3,5-dimethylphenyl)sulfone; 4,4'-dihydroxybenzophenone and bis(4-hydroxyphenyl)sulfide, etc. Substituted products and derivatives thereof can also be used. Two or more kinds of these may be mixed and used. It is also possible to use, in combination, aliphatic glycols such as ethylene glycol, propylene glycol, butylene glycol, hexylene glycol, neopentyl glycol, alicyclic glycols such as 1,4-cyclohexanedimethanol, alkylene oxide-addition polymer of bisphenols (e.g., ethylene oxide-addition polymer of bisphenol A), etc., if they are used in a small amount so as not to significantly reduce the features of the polyarylate resin.

Among the above diphenols, 2,2-bis(4-hydroxyphenyl)propane ("bisphenol A"); bis(4-hydroxy-3,5-dimethylphenyl)methane; 2,2-bis(4-hydroxy-3,5-dimethylphenyl)propane; 1,1-bis(4-hydroxyphenyl)-3,3,5-trimethylcyclohexane ("bisphenol TMC") are preferable because of their handling ability and mechanical properties.

Therefore, the specific examples of the polyarylate resins used in the present invention are the polyarylate resins obtained by reacting any combination of the aromatic dicarboxylic acids and diphenols listed above. Among these, the following combination is preferable because of the mechanical properties and cost, etc.: polyarylate obtained by the reaction between terephthalic acid and 2,2-bis (4-hydroxyphenyl)propane ("bisphenol A")(e.g., trade name: U polymer, Unitika Ltd.); polyarylate obtained by the reaction between isophthalic acid and 2,2-bis(4-hydroxyphenyl) propane (e.g., trade name: Arylon, Du Pont); polyarylate obtained by the reaction between the mixture of terephthalic acid and isophthalic acid and 2,2-bis(4-hydroxyphenyl)propane; polyarylate obtained by the reaction between the mixture of terephthalic acid and isophthalic acid and the mixture of 2,2-bis(4-hydroxyphenyl)propane and 1,1-bis(4-hydroxyphenyl)-3,3,5-trimethylcyclohexane; polyarylate obtained by the reaction between the mixture of isophthalic acid and 2,5-naphthalenedicarboxylic acid and 2,2-bis(4-hydroxyphenyl)propane; polyarylate obtained by the reaction between the mixture of isophthalic acid and 2,5-naphthalenedicarboxylic acid and the mixture of 2,2-bis(4-hydroxyphenyl) propane and 1,1-bis(4-hydroxyphenyl)-3,3,5-trimethylcyclohexane; and polyarylate resin produced using two or more kinds of aromatic dicarboxylic acids and/or diphenols used for producing these resins. The above polyarylate resins can be used alone, or in a combination of two or more kinds which have different compositions or components and/or different molecular weights.

Although there is no specific limitation to the molecular weight of the polyarylate resins, for example, the

weight average molecular weight (Mw) measured at 25°C by gel permeation chromatography (GPC) using chloroform is typically 15,000 to 80,000, and preferably 30,000 to 70,000 in terms of monodisperse polystyrene. If Mw is less than 15,000, the mechanical properties of the obtained polyarylate resin composition tends to be reduced, and if Mw is more than 80,000, the moldability is likely to be reduced.

(Thermoplastic polyester resin)

The thermoplastic polyester resin used in the present invention is any of conventionally known thermoplastic polyester resins obtained by the reaction between a dicarboxylic acid compound and/or an ester-formable derivative of dicarboxylic acid and a diol compound and/or an ester-formable derivative of a diol compound.

For the above dicarboxylic compound, an aromatic dicarboxylic acid is preferable. Examples thereof include: terephthalic acid, isophthalic acid, orthophthalic acid; 2,6-naphthalanedicarboxylic acid; 4,4'-biphenyldicarboxylic acid; 4,4'-diphenyletherdicarboxylic acid; 4,4'-diphenylmethanedicarboxylic acid; 4,4'-diphenylsulfonedicarboxylic acid; 4,4'-diphenylisopropylidenedicarboxylic acid, and the like. Substituted compounds thereof (e.g., an alkyl substituted compound of methylisophthalic acid, etc.) and ester-formable derivatives thereof (e.g., alkyl ester compounds such as terephthalic acid dimethyl, or 2,6-naphthalenedicarboxylic acid dimethyl) can also be used. Aromatic oxyacids such as p-oxybenzoate and p-hydroxyethoxybenzoate, and ester-formable derivatives thereof may also be used, and are included in the definition of aromatic dicarboxylic acid herein. Two or more kinds of these monomers may be mixed and used. One or more kinds of aliphatic dicarboxylic acids, such as adipic acid, azelaic acid, dodecanedioic acid, sebacic acid may be mixed and used with these aromatic dicarboxylic acids if they are used in a small amount which does not deteriorate the properties of the obtained polyester resin composition.

For the crystallization property, strength, and modulus of elasticity of the obtained thermoplastic polyester resin, it is preferable to use terephthalic acid, 2,6-naphthalenedicarboxylic acid, 4,4'-biphenyldicarboxylic acid and/or ester-formable derivatives thereof.

For the above diol compounds, aliphatic glycols such as ethylene glycol, propylene glycol, butylene glycol, hexylene glycol, neopentyl glycol, etc; alicyclic glycols such as 1,4-cyclohexanedimethanol, etc; and aromatic diols such as 1,4-phenylenedioxydimethanol may be used. Cyclic esters such as ε-caprolactone may also be used, and they are included in the definition of the diol compound herein for convenience sake. Two or more kinds of these may be mixed and used. Additionally, long chain type diol compounds (e.g., polyethylene glycol, polytetramethylene glycol), and alkylene oxide-added polymer of bisphenols (e.g., ethylene oxide-added polymer of bisphenol A), etc., may be used in combination if they are used in a small amount which does not significantly reduce the modulus of elasticity of the thermoplastic polyester resin.

Ethylene glycol, butylene glycol, and/or 1,4-cyclohexan dimethanol are preferably used because of their handling ability and the strength, modulus of elasticity and the like of the obtained thermoplastic polyester resin.

Therefore, the specific examples of the thermoplastic polyester resins used in the present invention are polyester resins obtained by reacting any combination of the above examples of aromatic dicarboxylic acids and diol compounds. Specific examples of which include: polyethylene terephthalate, polypropylene terephthalate, polybutylene terephthalate, polyhexamethylene terephthalate, polycyclohexane-1,4-dimethyl terephthalate, neopentyl terephthalate, polyethylene isophthalete, polyethylene naphthalate, polybutylene naphthalate, and polyhexamethylene naphthalate, etc. Copolymerized polyester produced by using two or more kinds of acids and/or diols used in producing these resins is also included. Among the polyester resins, polyethylene terephthalate, polybutylene terephthalate, polycyclohexane-1,4-dimetylterephthalate, polyethylene naphthalate are preferable because of their strength, modulus of elasticity, cost, and the like. The above thermoplastic polyester resins can be used alone, or in a combination of two or more kinds having different compositions or components and/or different intrinsic viscosity values.

For the molecular weight of the thermoplastic polyester resin, the logarithmic viscosity measured at 25°C using phenol/tetrachloroethane (5/5 ratio by weight) mixture solvent is typically 0.3 to 2.0 (dl/g), preferably 0.35 to 2.0 (dl/g), more preferably 0.37 to 2.0 (dl/g), and furthermore preferably 0.40 to 1.8 (dl/g). If the logarithmic viscosity is less than 0.3 (dl/g), the mechanical properties and shock resistance of the resultant polyester resin composition tend to be reduced, and if the logarithmic viscosity is more than 2.0 (dl/g), the molding flowability tends to be reduced since the fusion viscosity is high.

(Silane-treated foliated phyllosilicate)

The silane-treated foliated phyllosilicate used in the present invention is a composite in which an organosilane compound represented by the general formula (1) is introduced in a swellable silicate:

$$Y_nSiX_{4-n} \quad (1)$$

(where n is an integer from 0 to 3; Y is a hydrocarbon group with 1 to 25 carbons; the hydrocarbon group may have a substituent(s); X is a hydrolyzable group or hydroxyl group; n Ys may be the same type or different types; and 4-n Xs may be the same type or different types).

The above swellable silicate consists of tetrahedral crystalline sheet consisting essentially of silicon oxide, and octahedral crystalline sheet consisting essentially of metal hydroxide. Examples of them include, for example, smectite clay, swellable mica, and the like. Using smectite clay and/or swellable mica as the swellable silicate is preferable because of the dispersibility of the swellable silicate in the resin composition of the present invention and easy obtainability, and in terms of improving the physical properties of the resin composition.

The above smectite clay is represented by the general formula (3) and can be naturally occurring or synthetic:

$$X_{0.2-0.6}Y_{2-3}Z_4O_{10}(OH)_2 \cdot nH_2O \quad (3)$$

(where X is one or more components selected from the group consisting of K, Na, 1/2Ca, and 1/2Mg; Y is one or more components selected from the group consisting of Mg, Fe, Mn, Ni, Zn, Li, A1, and Cr; and Z is one or more components selected from the group consisting of Si and A1. $H_2O$ represents a water molecule linked to the interlayer ion, and n fluctuates significantly depending on interlayer ion and relative humidity). Specific examples of the smectite clay include, for example, montmorillonite, beidellite, nontronite, saponite, iron saponite, hectorite, sauconite, stevensite and bentonite, etc., or substituted compounds and derivatives thereof, or mixtures thereof. The basal spacing of a smectite clay in initial aggregated state is about 10 to 17 Å, and the average grain size of smectite clay in the aggregated state is about 1000 Å to 1000000 Å.

Furthermore, the above swellable mica is represented by the general formula (4) and can be naturally occurring or synthetic:

$$X_{0.5-1.0}Y_{2-3}(Z_4O_{10})(F,OH)_2 \quad (4)$$

(where X is one or more components selected from the group consisting of Li, Na, K, Rb, Ca, Ba, and Sr; Y is one or more components selected from the group consisting of Mg, Fe, Ni, Mn, A1, and Li; and Z is one or more components selected from the group consisting of Si, Ge, A1, Fe and B). They have a property of swelling in water, a polar solvent compatible with water in n arbitrary ratio, and a mixture solvent of water and the polar solvent. For example, they include lithium type taeniolite, sodium type taeniolite, lithium type tetrasilicon mica, and sodium type tetrasilicon mica, or the like, or substituted compounds or derivatives thereof, or mixtures thereof. The basal spacing of swellable mica in initial aggregated state is about 10 to 17 Å, and the average grain size of swellable mica in an aggregated state is about 1000 Å to 1000000 Å.

Among the above swellable mica, there are ones having a structure similar to vermiculites, and it is possible to use such vermiculite equivalents. The vermiculite equivalents include 3-octahedron type and 2-octahedron type which are represented by the general formula (5):

$$(Mg,Fe,Al)_{2-3}(Si_{4-x}Al_x)O_{10}(OH)_2 \cdot (M^+,M^{2+}{}_{1/2})_x \cdot nH_2O \quad (5)$$

(where M is an exchangable cation of alkali or alkaline earth metal such as Na and Mg, and x=0.6 to 0.9, n=3.5 to 5). The basal spacing of vermiculite equivalents in the initial aggregated state is about 10 to 17 Å, and the average grain size of vermiculite equivalents in the aggregated state is about 1000 Å to 5000000 Å.

The swellable silicate may be used alone, or may be used in a combination of two or more kinds. Among these, montmorillonite, bentonite, hectorite, and swellable mica having sodium ions at the interlayer, and combinations thereof are preferable because of their dispersibility in the resin compositions of the present invention, and easy obtainability and effects on improving physical properties of the resin composition.

For the crystal structure of the swellable silicate, a structure with a high purity in which the crystals are regularly laminated along the C-axis direction is desirable. However, a structure in which the crystal cycle is irregular and a plurality of types of crystal structures are mixed (i.e., mixed-layer mineral) can also be used.

For the organo-silane compounds introduced into the swellable silicate, a commonly used arbitrary organo-silane compound may be used, and the organo-silane compounds represented by the general formula (1):

$$Y_nSiX_{4-n} \quad (1)$$

are typically used. In the general formula (1), n is an integer from 0 to 3; Y is a hydrocarbon group with 1 to 25 carbons; and the hydrocarbon group may have a substituent. Examples of a substituent in the case where the hydrocarbon group having 1 to 25 carbons has a substituent include: a group bonded by ester bond, a group bonded by ether bond; epoxy group, amino group, carboxylic group, a group having a carbonyl group at the terminus, amide group, mercapto group, a group bonded by sulfonyl bond, a group bonded by sulfinyl bond, nitro group, nitroso group, nitrile group, halogen atom, hydroxyl group, and the like. The compound may be substituted with one kind of these, or may be substituted with two or more kinds of these. In the case of hydrocarbon group having a substituent, the total number of carbons including the carbons in the substituent is preferably 1 to 25, but it is not a limitation. X is a hydrolyzable group and/or hydroxyl group. Examples of the hydrolyzable groups include one or more groups selected from the group consisting of alkoxy group, alkenyloxy group, ketoxime group, acyloxy group, amino group, aminooxy group, amide group, and halogen atom. When n or 4-n in the general formula (1) is 2 or more, n Ys and 4-n Xs may be the same kind or different kinds.

In the specification of the present application, the hydrocarbon group means a saturated or unsaturated, monovalent or polyvalent aliphatic hydrocarbon group with straight chain or branched chain (i.e., having a side chain), aromatic hydrocarbon group or alicyclic hydrocarbon group or aliphatic hydrocarbon group containing aromatic hydrocarbon and/or alicyclic hydrocarbon. Examples of these include alkyl group, alkenyl group, alkynyl group, phenyl group, naphthyl group, cycloalkyl group, and the like. In the specification of the present application, "alkyl group" is intended to include a polyvalent hydrocarbon group such as "alkylene group" unless otherwise noted. Similarly, alkenyl group, alkynyl group, phenyl group, naphthyl group, and cycloalkyl group include alkenylene group, alkynylene group, phenylene group, naphthylene group, and cycloalkylene group, respectively.

In the general formula (1), examples in the case where Y is a hydrocarbon group having 1 to 25 carbons include: a compound having a straight long chain alkyl group such as decyl trimethoxysilane; a compound having a lower alkyl group such as methyl trimethoxysilane; a compound having an unsaturated hydrocarbon group such as a 2-hexenyl trimethoxysilane; a compound having an alkyl group which has a side chain such as 2-ethylhexyl trimethoxysilane; a compound having a phenyl group such as phenyl triethoxysilane; a compound having a naphthyl group such as 3-β-naphthylpropyl trimethoxysilane, and a compound having an aralkyl group such as p-vinylbenzyl trimethoxysilane. Among the examples in which Y is a hydrocarbon group having 1 to 25 carbons, specific examples of the compounds in which Y is a group having a vinyl group include vinyl trimethoxysilane, vinyl trichlorosilane, and vinyl triacetoxysilane.

Examples are now listed in which Y has a substituent. Examples of the compound in which Y is a group having a group substituted with a group bonded by an ester group include γ-methacryloxypropyl trimethoxysilane. Examples of the compound in which Y is a group having a group substituted with a group bonded by an ether group include γ-polyoxyethylenepropyl trimethoxysilane and 2-ethoxyethyl trimethoxysilane. Examples of the compound in which Y is a group substituted with an epoxy group include γ-glycidoxypropyl trimethoxysilane. Examples of the compound in which Y is a group substituted with an amino group include γ-aminopropyl trimethoxysilane, γ-(2-aminoethyl)aminopropyl trimethoxysilane, and γ-anilinopropyl trimethoxysilane. Examples of the compound in which Y is a group substituted with a carboxyl group include γ-(4-carboxyphenyl)propyl trimethoxysilane. Examples of the compound in which Y is a group substituted with a group having a carbonyl group in the termini include γ-ureidopropyl triethoxysilane. Examples of the compound in which Y is a group substituted with a mercapto group include γ-mercaptopropyl trimethoxysilane. Examples of the compound in which Y is a group having a group substituted with a group bonded by a sulfonyl group include γ-phenylsulfonylpropyl trimethoxysilane. Examples of the compound in which Y is a group having a group substituted with a group bonded by a sulfinyl group include γ-phenylsulfinylpropyl trimethoxysilane. Examples of the compound in which Y is a group substituted with a nitro group include γ-nitropropyl triethoxysilane. Examples of the compound in which Y is a group substituted with a nitroso group include γ-nitrosopropyl triethoxysilane. Examples of the compound in which Y is a group substituted with a nitrile group include γ-cyanoethyl triethoxysilane and γ-cyanopropyl triethoxysilane. Examples of the compound in which Y is a group substituted with a halogen atom include γ-chloropropyl triethoxysilane. Other than the above, organo-silane compound in which Y is a group having a hydroxyl group may also be used. Such an example includes N,N-di(2-hydroxyethyl)amino-3-propyl triethoxysilane. The hydroxyl group may be in the form of silanol group (SiOH). Substituted compounds or derivatives of the above organo-silane compounds may also be used. These organo-silane compounds may be used alone or in a combination of two or more kinds.

The basal spacing of the silane-treated foliated phyllosilicate used in the present invention may be in an expanded state compared to the initial basal spacing of the swellable silicate, due to the presence of the introduced organo-silane compound. For example, if an organo-silane compound is not introduced, the swellable silicate which

is dispersed in the dispersion medium and the basal spacings thereof have been expanded may return to the state in which the layers of swellable silicate are again aggregated after the dispersion medium is removed. On the other hand, according to the present invention, by introducing an organo-silane compound after the basal spacing is expanded, the obtained silane-treated foliated phyllosilicate can remain in the state in which the basal spacing is expanded without the layers being aggregated after the dispersion medium is removed. The basal spacing of the silane-treated foliated phyllosilicate is 1.3 times or more, preferably 1.5 times or more, more preferably 1.7 times or more, still more preferably 2 times or more, compared to the initial basal spacing of the swellable silicate. Accordingly, by introducing an organo-silane compound and expanding the basal spacing, it is possible to improve the affinity between the silane-treated foliated phyllosilicate and the resin.

Here, it is possible to confirm, by using a variety of methods, that the silane-treated foliated phyllosilicate is formed by the introduction of an organo-silane compound into the swellable silicate. The following method is an example of a confirmation method.

First, the silane-treated foliated phyllosilicate is washed with an organic solvent such as tetrahydrofuran or chloroform, whereby organo-silane compound merely adsorbed on the silane-treated foliated phyllosilicate is washed and removed. The washed silane-treated foliated phyllosilicate is grounded in a mortar or the like so as to obtain a powder-like product, and then sufficiently dried. Then, a material for window such as powdered potassium bromide (KBr) are sufficiently mixed with the silane-treated foliated phyllosilicate in a predetermined ratio, and the mixture is pressed to obtain tablets. Then the absorption bands originating from the organo-silane compound are measured by a transmission method or the like, using Fourier transform (FT)-IR. If more accurate measurement is desired or the amount of the introduced organo-silane compound is small, it is desirable to directly measure the sufficiently dried powdered silane-treated foliated phyllosilicate by a diffuse reflectance infrared spectroscopy (DRIFT).

It is also possible to confirm, by a variety of methods, that the basal spacing of the silane-treated foliated phyllosilicate is expanded more than the initial basal spacing of the swellable silicate. The following method is an example of a confirmation method.

Specifically, similar to the above, the silane-treated foliated phyllosilicate is washed with an organic solvent, whereby the organo-silane compound adsorbed on the silane-treated foliated phyllosilicate is removed. After the washed silane-treated foliated phyllosilicate is dried, the expansion may be confirmed by a small-angle X-ray diffraction method (SAXS), or the like. In this method, the value of the X-ray diffraction peak angle originating from (001) plane of the powdered silane-treated foliated phyllosilicate is measured by the SAXS, and the basal spacing can be obtained by applying the measured value to the Bragg's equation for calculation. The initial basal spacing of the swellable silicate is similarly measured, and by comparing these two, the expansion of the basal spacing can be confirmed.

As described above, by FT-IR or the like, the absorption bands originating from the added organo-silane compound after the washing with an organic solvent are observed, and by SAXS it is measured that the resultant basal spacing is expanded more than that of the swellable silicate as the raw material. Accordingly, it is possible to determine that the desired silane-treated foliated phyllosilicate is formed.

(Addition and dispersion of a silane-treated foliated phyllosilicate to a resin composition)

The resin composition according to the present invention is prepared so that the lower limit of the amount of the silane-treated foliated phyllosilicate added to the 100 parts by weight of the resin is typically 0.1 parts by weight, preferably 0.2 parts by weight, more preferably 0.3 parts by weight, still more preferably 0.4 parts by weight, further preferably 0.5 parts by weight, still further preferably 1.0 parts by weight, and particularly preferably 1.5 parts by weight. The upper limit of the adding amount is typically 50 parts by weight, preferably 45 parts by weight, more preferably 40 parts by weight, still more preferably 35 parts by weight, and particularly preferably 30 parts by weight.

In the polycarbonate resin composition, if the adding amount of the silane-treated foliated phyllosilicate is less than 0.1 parts by weight, the effect of improving mechanical properties, deflection temperature under load, and anisotropy may be insufficient. If the amount is more than 50 parts by weight, the exterior appearance and transparency of the molded product tend to be deteriorated. In the polyarylate resin composition, if the adding amount of the silane-treated foliated phyllosilicate is less than 0.1 parts by weight, the effect of improving mechanical properties, dimensional accuracy, and a warpage may be insufficient. If the amount is more than 50 parts by weight, the transparency and surface smoothness tend to be deteriorated. In the polyester resin composition, if the lower limit of the adding amount of the silane-treated foliated phyllosilicate is less than 0.1 parts by weight, the effect of improving moldability and dimensional stability may be insufficient. If the upper limit of the amount is more than 50 parts by weight, the exterior appearance of the molded product and flowability during the molding tend to be deteriorated.

The resin composition is prepared so that the lower limit of the ash content ratio in the resin composition originating from the silane-treated foliated phyllosilicate is typically 0.1 % by weight, preferably 0.2 % by weight, more preferably 0.3 % by weight, still more preferably 0.4 % by weight, further preferably 0.5 % by weight, still further preferably 1.0 % by weight, and particularly preferably 1.5 % by weight. The resin composition is prepared so that the

upper limit of the ash content ratio is typically 30 % by weight, preferably 28 % by weight, more preferably 25 % by weight, still more preferably 23 % by weight, and particularly preferably 20 % by weight. Herein, the ash content ratio means the percentage by weight of the swellable silicate component which remains after the resin composition is heated to ashes at about 620°C to the resin composition before the heating and ashing. It is measured, for example, based on JIS K 7052.

In the polycarbonate resin composition, if the ash content ratio is less than 0.1 % by weight, the effect of improving mechanical properties, deflection temperature under load, and anisotropy may be insufficient. If the amount is more than 30 % by weight, the exterior appearance and transparency of the molded product tends to be deteriorated. In the polyarylate resin composition, if the ash content ratio is less than 0.1 % by weight, the effect of improving mechanical properties, dimensional accuracy, and a warpage may be insufficient. If the amount is more than 30 % by weight, the transparency and surface smoothness tend to be deteriorated. In the polyester resin composition, if the lower limit of the ash content ratio is less than 0.1 % by weight, the effect of improving moldability and dimensional stability may be insufficient. If the upper limit of the amount is more than 30 % by weight, the exterior appearance of the molded product and flowability during the molding tend to be deteriorated.

The structure of the silane-treated foliated phyllosilicate dispersed in the resin composition according to the present invention is totally different from that of the swellable silicate before the addition, which is an aggregated structure having a size of the order of 1 μm and with many laminated layers. Specifically, by introducing the organosilane compound having an affinity with the matrix resin, and by using the silane-treated foliated phyllosilicate having an expanded basal spacing compared to the initial swellable silicate, the layers are exfoliated from each other and fractionated independently from each other. As a result, the silane-treated foliated phyllosilicate is dispersed in the resin composition in very fine thin plate-like shapes which are independent from each other, and the number of which is significantly increased compared to the number of the particles in the swellable silicate as the raw material. The dispersed state of such a thin plate-like silane-treated foliated phyllosilicate in the resin composition can be represented by the following aspect ratio (ratio of layer length to layer thickness), the number of dispersed particles, average layer thickness, and the maximum layer thickness.

The average aspect ratio of the silane-treated foliated phyllosilicate is defined as the numerical average value of the ratio of the layer length to the layer thickness of the silane-treated foliated phyllosilicate dispersed in the resin. The average aspect ratio of the silane-treated foliated phyllosilicate in the resin composition according to the present invention is typically 10 to 300, preferably 15-300, and more preferably 20 to 300.

In the polycarbonate resin composition, if the average aspect ratio is less than 10, effect of improving the modulus of elasticity and deflection temperature under load may be insufficient. In the polyarylate resin composition, if the average aspect ratio is less than 10, the effect of improving mechanical properties, dimensional accuracy, and warpage may be insufficient. In the polyester resin composition, if the average aspect ratio is less than 10, the effect of improving the modulus of elasticity and dimensional stability may be insufficient. Furthermore, in the polyester resin composition, if the average aspect ratio is less than 10, the numerical values of $\eta_e$-3$\eta$, $\Delta\eta_e$, and $J_{e0}\cdot\eta_0$ described later may not be within a predetermined range, which results in the tendency of deteriorating moldability such as the releasability and the molding cycle. If the average aspect ratio is more than 300, the effect does not change. Therefore, it is not necessary to increase the average aspect ratio to more than 300.

The [N] value which represents the number of the dispersed particles is defined as the number of the dispersed particle in an area of 100 $\mu m^2$ of the resin composition per unit wt% of the swellable silicate. The [N] value of the silane-treated foliated phyllosilicate in the resin composition according to the present invention is typically 30 or more, preferably 45 or more, and more preferably 60 or more. Although there is no specific upper limit, the effect does not change if the [N] value exceeds around 1000. Therefore, it is not necessary to increase the [N] value to more than 1000.

The [N] value may be obtained by, e.g., the following method. Specifically, it may be obtained by cutting the resin composition into a super thin segment with a thickness of about 50 μm to 100 μm, and dividing, the number of the particles of the silane-treated foliated phyllosilicate existing in an arbitrary region with an area of 100 $\mu m^2$ on the image of the segment taken by a TEM or the like by the weight ratio of the swellable silicate used. Alternatively, the [N] value may be obtained by selecting an arbitrary region on the TEM image in which 100 or more particles exist (the area should be measured in advance), dividing the number of the particles existing in the region by the weight ratio of the swellable silicate used, and then converting the value into the number per an area of 100 $\mu m^2$. Accordingly, the [N] value can be quantified by using a TEM photographing of the resin composition.

The average layer thickness is defined as the numerical average value of the layer thickness of the silane-treated foliated phyllosilicate dispersed in a thin plate-like shape. The upper limit of the average layer thickness of the silane-treated foliated phyllosilicate of the resin composition according to the present invention is 500 Å or less, preferably 450 Å or less, more preferably 400 Å or less. In the polycarbonate resin composition, if the average layer thickness is more than 500 Å, the effect of improving the mechanical properties, deflection temperature under load, and anisotropy may be insufficient. In the polyarylate resin composition, if the average layer thickness is more than 500 Å, the effect of improving mechanical properties, dimensional accuracy, and warpage may be insufficient. In the polyester

resin composition, if the average layer thickness is more than 500 Å, the effect of improving the mechanical properties, heat resistance and dimensional stability may be insufficient. Furthermore, in the polyester resin composition, if the average layer thickness is more than 500 Å, the numerical values of $\eta_e$-3η, $\Delta\eta_e$, and $J_{e0}\cdot\eta_0$ described later may not be within a predetermined range, which results in the tendency of deteriorating the moldability such as releasability and the molding cycle.

Although the lower limit of the average layer thickness is not specifically limited, in the polycarbonate resin composition and the polyarylate composition, it is preferably more than 50 Å, more preferably 60 Å or more, and still more preferably 70 Å or more. On the other hand, in the polyester resin composition, it is more than 10 Å, preferably more than 30 Å, and more preferably more than 50 Å.

The maximum layer thickness is defined as the maximum value of the layer thickness of the silane-treated foliated phyllosilicate dispersed in a thin-plate shape in the resin composition according to the present invention. The upper limit of the maximum layer thickness of the silane-treated foliated phyllosilicate is 2000 Å or less, preferably 1800 Å or less, and more preferably 1500 Å or less. In the polycarbonate resin composition, if the maximum layer thickness is more than 2000 Å, the balance among the mechanical properties, deflection temperature under load, anisotropy, transparency, and surface quality may be deteriorated. In the polyarylate resin composition, if the maximum layer thickness is more than 2000 Å, the balance among the mechanical properties, dimensional accuracy, warpage, transparency, and surface smoothness may be deteriorated. In the polyester resin composition, if the maximum layer thickness is more than 2000 Å, the surface quality may be deteriorated. Furthermore, in the polyester resin composition, if the maximum layer thickness is more than 2000 Å, the numerical values of $\eta_e$-3η, $\Delta\eta_e$, and $J_{e0}\cdot\eta_0$ described later may not be within a predetermined range, which results in the tendency of deteriorating moldability such as the releasability and the molding cycle.

Although the lower limit of the maximum layer thickness of the silane-treated foliated phyllosilicate is not specifically limited, in the polycarbonate resin composition and the polyarylate resin composition, it is preferably more than 100 Å, more preferably 150 Å or more, and still more preferably 200 Å or more. On the other hand, in the polyester resin composition, it is more than 10 Å, preferably more than 50 Å, and more preferably more than 100 Å.

The layer thickness and the layer length of the silane-treated foliated phyllosilicate can be obtained from the image of a film, thin-walled molded product and the like photographed using a microscope or the like. The film is formed by heat press molding or stretching molding of the resin composition according to the present invention after heating and fusing the resin composition. The thin-walled molded product is obtained by injection molding of a fused resin.

Specifically, a sample piece of a film prepared by the above method, or a thin, flat plate-shaped product molded by an injection molding with a thickness of about 0.5 mm to 2 mm is placed. A super-thin segment is then cut out from the sample piece along a direction perpendicular to the direction of the plane of the segment, by a thickness of about 50 µm to 100 µm. The segment is then observed by a transmission electron microscope or the like with a high magnification of about 40,000 to 100,000 times or more, whereby the layer thickness and layer length may be obtained. The measurement can be quantified by selecting any arbitrary region containing 100 or more particles of the swellable silicate or silane-treated foliated phyllosilicate on the transmission electron microscopic image obtained by the above described method, generating a picture of the region by a image processing device, performing a computation process, and the like. Alternatively, it can be obtained by measurement using a ruler, or the like.

(Rheology characteristics of the polyester resin composition)

The polyester resin composition according to the present invention is further characterized by the rheology characteristics thereof. The rheology characteristics may be represented by, for example, a difference ($\eta_e$-3η) between an extensional viscosity $\eta_e$ and the triple value of a shear viscosity η of the resin composition, a difference ($\Delta\eta_e$) of values of the extensional viscosity measured at different rates of strain, and a product $J_{e0}\cdot\eta_0$ of an equilibrium compliance $J_{e0}$ and zero shear viscosity $\eta_0$.

The difference ($\eta_e$-3η) between the extensional viscosity $\eta_e$ and the triple value of the shear viscosity 3η can be an index for the strain hardening property of the resin. The strain hardening property means a property in which the extensional viscosity becomes greater as the strain becomes greater. Nihon Rheology Gakkaishi, vol. 13, pp. 13 to 23 describes a rate of strain.

According to the method for measuring the extensional viscosity by drawing a sample formed in a rod shape or a strip shape in a fusion state, if there is no strain hardening property, the value of the extensional viscosity increases as the sample is drawn (as the strain is increased), and then becomes close to 3η, and reaches to a constant value. On the other hand, if there is any strain hardening property, the value of the extensional viscosity increases beyond 3η as the strain is increased and then reaches to a constant value. Specifically, the $\eta_e$-3η when there is no strain hardening property is 0 or less while $\eta_e$-3η of a resin when there is a strain hardening property is more than 0, and as the strain hardening property increases, the value of $\eta_e$-3η increases. This is the reason why the $\eta_e$-3η can be the index of a strain hardening property.

However, the fusion viscosity of the thermoplastic polyester resin is low and thus it is impossible to retain the shape of the sample such as a rod shape or a strip shape in the molten state. Therefore the above-described method cannot measure the extensional viscosity. Therefore, the method for measuring the extensional viscosity of the polyester resin composition according to the present invention was performed in accordance with the method described in Japanese Patent Application No. 9-113038. Specifically, by using a capillary rheometer provided with a longer die and a shorter die having the same diameter, the pressure loss of fused resin in each of the dies is measured. The pressure loss in a virtual die with a length of zero ($P_0$) is then calculated according to the equation (6):

$$P_0=(p_2 \cdot L_1-p_1 \cdot L_2)/(L_1-L_2) \quad (6)$$

where $p_1$ the pressure loss measured in the longer die, $p_2$ is the pressure loss measured in the shorter die, $L_1$ is the length of the longer die, and $L_2$ is the length of the shorter die.

The shear viscosity $\eta$ and the shear rate $\dot{\gamma}$ can be obtained using a capillary rheometer.

The extensional viscosity $\eta_e$ and rate of strain $\dot{\varepsilon}$ are calculated by the equation (7) and (8), respectively:

$$\eta_e=[9(n+1)^2 p_0{}^2]/32\eta\dot{\gamma}^2 \quad (7)$$

$$\dot{\varepsilon}=4\eta\dot{\gamma}^2/3(n+1)p_0 \quad (8),$$

where $\dot{\gamma}$ is the shear rate and $\eta$ is the shear viscosity.

n is the power-law index, which is defined by the equation (9):

$$\eta=c\dot{\gamma}^{n-1} \quad (9)$$

where c is a constant.

$\eta_e$ measured by such a method is the extensional viscosity.

Therefore, it is possible, as described below, to calculate the strain hardening rate from $\eta_e$ and $\eta$ obtained by the above-described method. Thus, according to the present specification, the strain hardening rate refers to the value calculated by the following method.

After measuring the extensional viscosity and the shear viscosity of the resin at 280°C by the above-described method, the relationship between the shear rate and the shear viscosity is approximated by the equation (10):

$$\eta=a\dot{\gamma}^p \quad (10),$$

using the least-squares method, thereby obtaining a and p. The relationship between the rate of strain and the extensional viscosity is approximated by the equation (11):

$$\eta=b\dot{\varepsilon}^q \quad (11),$$

using the least-squares method, thereby obtaining b and q.

The difference ($\eta_e$-3$\eta$) between $\eta_e$ at $\dot{\varepsilon}$ =100 (1/s) and 3$\eta$ at $\dot{\gamma}$=100 (1/s) is the index of the strain hardening property according to the present invention. Specifically, it can be calculated by

$$b \cdot 100^q-3a \cdot 100^p.$$

Therefore, in the polyester resin composition according to the present invention, the index $\eta_e$-3$\eta$ of the strain hardening property at a temperature of 280°C and at a rate of strain of 100 (1/s) is 300 Pa·s or more, preferably 350 Pa·s or more, more preferably 400 Pa's or more, still more preferably 500 Pa ·s or more, and particularly preferably 600 Pa·s or more. If $\eta_e$-3$\eta$ is less than 300 Pa' s, the moldability such as the releasability and molding cycle tends to be deteriorated. Although there is no specific upper limit for the index, it is around 15000 Pa· s.

Further, the extensional viscosity can be obtained by the method similar to the above-described method. Therefore, the polyester resin composition according to the present invention has, at a temperature of 280°C, a difference $\Delta\eta_e$ between $\eta_e$ at the rate of strain of 100 (1/S) and $\eta_e$ at the rate of strain of 1000 (1/S) is 500 Pa·s or more, preferably 600 Pa·s or more, and more preferably 700 Pa·s or more. If $\Delta\eta_e$ is less than 500 Pa·s, the moldability such as the releasability and molding cycle tends to be deteriorated. Although there is no specific upper limit for the extensional viscosity, it is around 15000 Pa·s.

Equilibrium compliance $J_{e0}$ is a measure for the size of elastic deformation and zero shear viscosity $\eta_0$ is a measure for the unlikelihood of plastic deformation. Therefore, the product $J_{e0}\cdot\eta_0$ of equilibrium compliance and zero shear viscosity is an index for the maximum relaxation time of resin, which indicates the unlikelihood of an intertwining of polymers to disentangle. Equilibrium compliance $J_{e0}$ and zero shear viscosity $\eta_0$ are measured based on the method shown below. First, using a stress controlled type fusion viscoelasticity measurement apparatus, the sample which is sandwiched between a cone and plate is fused, and then a constant stress is applied to the sample for measuring the strain occurred in the sample at 280°C. The creep compliance J(t) at that time is defined by the equation (12):

$$J(t)=\gamma(t)/\sigma \qquad (12)$$

wherein $\gamma(t)$ is a strain, $\sigma$ is a stress, and t is time. J(t) is obtained from the obtained value of the strain, therefrom the creep curve is generated. On one hand, the creep compliance after a sufficient time elapses is indicated in approximation as shown in the equation (13):

$$J(t)=J_{e0}+t/\eta_0 \qquad (13)$$

wherein $J_{e0}$ is an equilibrium compliance, and $\eta_0$ is a zero shear viscosity. Therefore, according to the equation (13), the approximation of the creep curve is provided as a straight line and from the intercepts of the straight line the equilibrium compliance $J_{e0}$ is calculated, and from the slope of the line $\eta_0$ is calculated. The first term ($J_{e0}$) of the equation (13) represents the size of the elastic deformation, and the second term ($t/\eta_0$) represents the size of plastic deformation.

Therefore, $J_{e0}\cdot\eta_0$ of the polyester resin composition of the present invention at a temperature of 280°C is 0.8 seconds or more, preferably 0.9 seconds or more, more preferably 1.0 second or more, still more preferably 1.2 seconds or more, and particularly preferably 1.5 seconds or more. If $J_{e0}\cdot\eta_0$ is less than 0.8 seconds, the moldability such as releasability and molding cycle tends to be deteriorated. Although there is no specific limitation for the upper limit of $J_{e0}\cdot\eta_0$, it is around 20 seconds.

The rheology characteristics of the polyester resin composition of the present invention typically satisfy at least one of the conditions regarding the above-described lower limits for each $\eta_e$-3$\eta$, $\Delta\eta_e$ and $J_{e0}\cdot\eta_0$. Preferably at least two of the conditions are satisfied, and more preferably all the conditions are satisfied. In the polyester resin composition, the silane-treated foliated phyllosilicate exists in a very fine, mutually independent thin-plate shape to a degree which is impossible to achieve by a conventional technique. The number thereof is significantly increased comparing to the number of particles of the raw material of the swellable silicate, whereby a homogeneous micro dispersion is achieved. This state of dispersion provides a significant factor for the rheology characteristics of the polyester resin composition, by which the releasability and molding cycle during fusion molding are improved. During the fusion molding, the dimensional stability (for, example, shrink mark due to crystallization) is not deteriorated. Furthermore, the surface quality of the molded product is not deteriorated since the silane-treated foliated phyllosilicate is dispersed in a very fine thin-plate shape.

(Method for producing a resin composition)

The method for producing the resin composition according to the present invention is not specifically limited, but it is preferably a method which includes the steps of, for example, (A) preparing a clay dispersion including a silane-treated foliated phyllosilicate and a dispersion medium; (B) mixing the clay dispersion and a polymerizable prepolymer which provides a desired resin through polymerization; and (C) polymerizing the polymerizable prepolymer.

Each of the steps (A) to (C) will be now described in detail.

In step (A), the silane-treated foliated phyllosilicate can be prepared by adding an organo-silane compound to a swellable silicate after expanding the basal spacing of the swellable silicate in the dispersion medium.

The above-described dispersion medium means water, a polar solvent compatible with water, and a mixture solvent of water and a polar solvent compatible with water. The polar solvent includes, for example, alcohols such as

methanol, ethanol, isopropanol; glycols such as ethylene glycol, propylene glycol, 1,4-butanediol; ketones such as acetone, methylethylketone; ethers such as diethyl ether, tetrahydrofuran; amide compounds such as N,N-dimethylformamide, N,N-dimethylacetoamide; and other solvents such as pyridine, dimethylsulfoxide, and N-methylpyrrolidone. Diester carbonates such as dimethyl carbonate and diethyl carbonate can also be used as the polar solvent. These polar solvents can be used alone or in combination of two or more kinds.

The expansion of the basal spacing of the swellable silicate in the dispersion medium can be achieved by sufficiently agitating and dispersing the swellable silicate in the dispersion medium. The basal spacing after the expansion is preferably three times the initial basal spacing of the swellable silicate or more, more preferably four times or more, and particularly preferably five times or more. There is no specific upper limit. If the basal spacing expands about 10 times or more, the measurements of the basal spacing will be difficult. In such a case, the swellable silicate exists substantially as a unit layer. Here, the initial basal spacing is referred to the basal spacing of the particle-form swellable silicate before the addition to the dispersion medium, in which the unit layers are laminated with each other to form an aggregated state.

Here, in the specification of the present application, the initial basal spacing of the swellable silicate means the basal spacing of the particle-form swellable silicate before the addition to the dispersion medium, in which the unit layers are laminated with each other to form an aggregated state. The basal spacing can be obtained by a small angle X-ray diffraction method (SAXS), or the like. Specifically, the X-ray diffraction peak angle value of the swellable silicate before the addition to the dispersion medium and the X-ray diffraction peak angle value in the dispersion in which the swellable silicate is dispersed in the dispersion medium are respectively by the SAXS, and then the basal spacing can be calculated and compared by assigning the measured peak angle values to the Bragg's equation.

Examples of methods for efficiently expanding the basal spacing of the swellable silicate include a method of performing the agitation in the dispersion medium at some thousands of rpm or more, and a method of applying an external physical force as described below. The external physical force may be applied using the commonly employed method of wet pulverizing of a filler. A common method of wet pulverizing of a filler includes, for example, a method of using hard particles. In this method, hard particles and the swellable silicate and an arbitrary solvent are mixed and agitated, and by the physical collision between the hard particle and the swellable silicate, the layers of the swellable silicate are separated. The commonly used hard particles are beads for filler grinding and include, for example, glass beads, zirconia beads, or the like. These beads for grinding are selected in consideration of the hardness of the swellable silicate or the materials of the agitator, and they are not limited to glass or zirconia. The grain size is also determined in consideration of the size of the swellable silicate, and is not absolutely limited by a numerical value. However, it is preferable to use beads having a diameter in the range of 0.1 to 6.0 mm. The solvent used here is not specifically limited, but it is preferable to use the above dispersion media.

As described above, the basal spacing of the swellable silicate is expanded, the layers in the aggregated state are exfoliated and separated, and the layers are made to exist independently. Thereafter, the organo-silane compound is added and agitated. Accordingly, by introducing the organo-silane compound onto the surface of the exfoliated layers of the swellable silicate, the silane-treated foliated phyllosilicate is obtained.

The introduction of the organo-silane compound may be conducted by, in the case of a method using a dispersion medium, adding and agitating the organo-silane compound in the dispersion containing the dispersion medium and the swellable silicate in which the basal spacing is expanded. The method of agitation is not specifically limited, and may be performed using a conventionally known wet agitator. Examples of the wet agitator include a high-speed agitator in which agitating fins rotate at a high speed so as to agitate, a wet mill type in which a sample is wet ground in the gap between the rotor and stator applied with a high shearing speed, a mechanical wet grinder type using a hard medium, a wet collision grinder type in which a sample is collided at a high speed by a jet nozzle or the like, and a wet ultrasonic grinder using ultrasonic wave, etc. If it is desirable to introduce the organo-silane compound more efficiently, the rotation speed of agitation will be set typically at 500 rpms or more, preferably at 1000 rpms or more, more preferably at 1500 rpms or more, and furthermore preferably at 2000 rpms or more. Alternatively, the shear rate applied will be typically at 300 (1/s) or more, preferably at 500 (1/s) or more, more preferably at 1000 (1/s) or more, and still more preferably at 1500 (1/s) or more. The upper limit of the rotation speed is about 25000 rpms and the upper limit of the shear rate is about 500000 (1/s). An agitation or shearing at these upper limit or more is unlikely to change the effect, and therefore it is not necessary to agitate beyond the upper limit.

In the case of a method using an external physical force, the organo-silane compound can be introduced by adding an organo-silane compound while adding the external physical force to the swellable silicate (e.g., while performing a wet grinding).

Alternatively, the organo-silane compound can also be introduced into the swellable silicate by adding the swellable silicate which has had its basal spacing expanded by the external physical force to a dispersion medium, and then, adding the organo-silane compound to the dispersion medium, in a manner similar to that in the aforementioned method of using a dispersion medium.

The introduction of the organo-silane compound into the swellable silicate can be achieved by the reaction

between the hydroxyl group existing on the surface of the swellable silicate with its basal spacing expanded, and the hydrolyzable group and/or the hydroxyl group of the organo-silane compound.

In the case where the organo-silane compound introduced into the swellable silicate further contains a reaction active functional group such as a hydroxyl group, a carboxyl group, an amino group, an epoxy group, or a vinyl group, a compound which may react with such reaction active groups may be further added so as to react the compounds with the reaction active groups. Accordingly, the chain length of the chain of the functional group contained in the organo-silane compound introduced in the swellable silicate can be extended, or the polarity can be changed. In such a case, usable compound to be added may be the aforementioned organo-silane compounds *per se*, but it is not limited to them. An arbitrary compound, for example, a compound containing an epoxy group, a compound containing an amino group, a compound containing a carboxyl group, a compound containing an acid anhydride group, a compound containing a hydroxyl group, and the like can be used depending on the purposes thereof.

The introduction of the organo-silane compound into the swellable silicate and the further reaction with a compound which may react with the reaction active group sufficiently occur at a room temperature, but the system may be heated if necessary. The maximum temperature for heating may be set to any arbitrary temperature so long as it is less than the decomposition temperature of the organo-silane compound used and less than the boiling point of the dispersion medium.

The amount of the organo-silane compound used is adjusted so as to sufficiently enhance the dispersibility of the silane-treated foliated phyllosilicate in the clay dispersion, affinity between the silane-treated foliated phyllosilicate and the resin, and the dispersibility of the silane-treated foliated phyllosilicate in the resin composition. If necessary, a plurality of kinds of organo-silane compounds having different functional groups from each other can be used together. Therefore, the addition amount of the organo-silane compound is not absolutely limited by a numerical value, but it is typically 0.1 to 200 parts by weight, preferably 0.2 to 180 parts by weight, more preferably 0.3 to 160 parts by weight, still more preferably 0.4 to 140 parts by weight, and particularly preferably 0.5 to 120 parts by weight for 100 parts by weight of the swellable silicate. If the amount of the organo-silane compound is less than 0.1 parts by weight, the micro-dispersion effect of the obtained silane-treated foliated phyllosilicate tends to be insufficient. On the other hand, the addition of 200 parts by weight or more does not change the effects, and therefore it is not necessary to add more than 200 parts by weight.

The method for preparing the clay dispersion is not specifically limited, and it includes, for example, a method of directly using a system which is obtained by preparing the silane-treated foliated phyllosilicate and which contains the dispersion medium and the silane-treated foliated phyllosilicate as the clay dispersion (referred to as the direct method: in this case, Step (A) is the step of preparing silane-treated foliated phyllosilicate); a method of obtaining a system by preparing the silane-treated foliated phyllosilicate, in which the system contains the dispersion medium and the silane-treated foliated phyllosilicate, and adding and mixing another desirable dispersion medium so as to substitute the first dispersion medium with the newly added dispersion medium, whereby a system consisting of the silane-treated foliated phyllosilicate and the newly added desirable dispersion medium is obtained, which is used as the clay dispersion (referred to as a substitution method); or a method of obtaining silane-treated foliated phyllosilicate by drying and removing a dispersion medium which is sufficiently mixed with a desirable dispersion medium (referred to as the mixing method). In terms of the dispersibility of the silane-treated foliated phyllosilicate, the direct method and the substitution method are preferable, but the mixing method can also be used.

In order to perform the mixing efficiently in the above mixing method, the rotation speed of the agitation is 500 rpm or more, or the shear rate added is 300 (1/s) or more. The upper limit of the rotation speed is 25000 rpm and the upper limit of the shear rate is 500000 (1/s). An agitation beyond these upper limits is not likely to change the effect, and therefore it is not necessary to agitate beyond the upper limit.

In the silane-treated foliated phyllosilicate contained in the clay dispersion obtained in Step (A), the original laminated/aggregated structure the swellable silicate had is substantially completely disappeared, and is fractionated in a thin plate shape or becomes a state in which the spacings between layers expand, i.e., so-called swollen state. As the indicator representing the swollen state, the basal spacing may be used. As described above, in order to make the silane-treated foliated phyllosilicate fractionated and a thin plate shape, the basal spacing of the silane-treated foliated phyllosilicate in the clay dispersion is preferably three times the initial basal spacing of the swellable silicate or more, more preferably four times or more, and still more preferably five times or more. If the basal spacing is less than three times, the silane-treated foliated phyllosilicate tends not to be efficiently micro-dispersed in the resin composition obtained according to the production method of the present invention.

In order to efficiently expand the basal spacing of the swellable silicate, it is preferable to use water or a mixture solvent of a majority amount of water and a small amount of polar solvent, thereby making a silane-treated foliated phyllosilicate-water dispersion. Herein, a majority amount means the amount in which the volume ratio of water to the dispersion medium is typically 70% or more, preferably 80% or more, and more preferably 90% or more. A small amount means the rest of the majority amount. The water in the water dispersion can be removed during any of the steps in the production process of the resin composition, i.e., Step (A), or the Step (B) or (C) described below. In the

case where the polymerization reaction is conducted in a two-phase system, such as an interfacial polymerization, water may be removed after the completion of the polymerization in Step (C). In the case where the polymerization reaction is conducted essentially in a homogeneous system, e.g., in a transesterifying method and in a fusion polymerization method, it is generally easier and helpful for reducing the production time to remove water during Step (B) rather than during Step (A). If water is removed by heat during Step (A), it is necessary to prevent from removing the dispersion medium other than water simultaneously, which causes the limitation of the temperature, etc., and thus it is inefficient. On the other hand, if water is removed during Step (B), there is no such a limitation and therefore water is efficiently and easily removed.

According to the step (A) described above, a desired clay dispersion can be prepared.

Next, in Step (B), the above-described clay dispersion and a polymerizable prepolymer of a resin can be mixed. Herein, a polymerizable prepolymer means one or more prepolymer selected from polymerizable monomer and oligomer.

In the case of polycarbonate resin, the polymerizable monomer means bisphenols and/or carbonate formable derivatives of bisphenols, and carbonic acid esters described above. In the case of polyarylate resin, the polymerizable monomer means aromatic dicarboxylic acid component (aromatic dicarboxylic acid compound and/or ester formable derivatives of dicarboxylic acid), and diphenol component (diphenol compound and/or ester formable derivatives of diphenol compound) described above. In the case of thermoplastic polyester resin, the polymerizable monomer means dicarboxylic acid compound and/or ester formable derivatives of dicarboxylic acid, and diol compound and/or ester formable derivatives of diol compound.

Oligomer for each of the above resins means a condensate obtained by the reaction of the above-described polymerizable monomer, which has a molecular weight providing a fusion viscosity enough for the clay dispersion containing the silane-treated foliated phyllosilicate to sufficiently homogeneously disperse in a fusion state. In terms of homogeneous dispersibility of the clay dispersion, the logarithmic viscosity of the oligomer measured at 25°C using a mixture solvent of phenol/tetrachloroethane (5/5 in ratio by weight) is typically less than 0.4 (dl/g), preferably 0.35 (dl/g) or less, and more preferably 0.30 (dl/g) or less. If the logarithmic viscosity is in this range, it is acceptable to add one or two or more other polymerizable monomers to a polyester oligomer in a fused state.

The method for obtaining the above-described oligomer is not specifically limited. For the preparation of oligomer for polycarbonate resin, either of the above interfacial polymerization method, pyridine method, and transesterifying method can be used, but the transesterifying method is preferable. For the preparation of oligomer for polyarylate resin, either of the following interfacial polymerization method and fusion polymerization method (acetate method or phenylester method) can be used, but the interfacial polymerization method is preferable. The preparation of oligomer for thermoplastic polyester resin includes commonly used methods, e.g., a method of esterifying a dicarboxylic acid compound with a diol compound, and a method of transesterifying a diol compound and dicarboxylic acid alkyl ester.

The above-described oligomer can also be obtained by depolymerizing a portion or the whole of a resin with a diol compound. For example, there is a method in which a portion or the whole of a thermoplastic resin is depolymerized with a diol compound. Specifically, a mixture of a thermoplastic polyester resin and a diol compound as a raw material is heated, and then the temperature is increased to around the temperature range from about 150°C to around the melting point of the thermoplastic polyester resin, so that depolymerization can be effected. Alternatively, the thermoplastic polyester resin as a raw material can be heated in advance to a temperature of the melting point or over, thereby making the thermoplastic polyester resin in the fused state. A diol compound can be then added thereto and agitated, thereby effecting depolymerization. If a copolymerized polyester resin containing residues of a plurality of types of diol compounds is desirable, a diol compound having a structure different from that of the diol component constituting the thermoplastic polyester resin can be added and used for the depolymerization. For the diol compound, one or two or more type(s) of various diol compounds which has been used as the polymerizable monomer for thermoplastic polyester resin can be used. The catalyst necessary for the reaction for obtaining the oligomer for thermoplastic polyester resin is an esterification catalyst, for which one or two or more type(s) of metal oxide, carbonate, acetate, alcholate, and the like can be used. In the depolymerization of the thermoplastic polyester resin, the catalyst necessary for the reaction is usually contained in the starting material thermoplastic polyester resin, but the above esterification catalyst can be further added and used if necessary.

The method for mixing the above-described polymerizable prepolymer and the clay dispersion is not specifically limited. For example, the clay dispersion may be mixed all together with the polymerizable prepolymer which has been made into the fused state or a solution. Alternatively, the method includes a method in which the clay dispersion is added continuously or sequentially over time and mixed. In order to make the polymerizable prepolymer in the fused state or a solution, an extruder or a polymerization reaction machine, for example, may be used. For the addition of the clay dispersion, a liquid adding apparatus may be used. In the case where the clay dispersion is continuously or sequentially added over time, the rate of adding the clay dispersion is not specifically limited, but the clay dispersion is continuously or sequentially added over time at the rate of 0.01 to 10.0 parts by weight per minute, preferably 0.03 to 8.0 parts by weight per minute, and more preferably 0.05 to 6.0 parts by weight per minute for 100 parts by weight

of the polymerizable prepolymer.

The timing of the mixing described above is not specifically limited, and the mixing can be performed in an arbitrary stage. For example, in the case of thermoplastic polyester resin, the mixing can be performed in either stages of preparing or storing the polymerizable monomer (in the monomer preparation tank, etc.), conducting a transesterification reaction of the above-described polymerizable monomer (in the transesterification tank), increasing the molecular weight of the transesterified product by condensation polymerization (in the polymerization tank, etc.), after having increased the molecular weight, or the like. The temperature of the system during the mixing is not specifically limited, but in the case of the thermoplastic polyester resin and/or the polymerizable prepolymer of thermoplastic polyester resin in the fused state, it is, for example, at the melting point or over, preferably at 80°C to 280°C, more preferably 80°C to 250°C, and still more preferably at 80°C to 200°C. If the mixing temperature is within that range, it is not necessary to keep the temperature during the mixing constant. Therefore, the range of the temperature fluctuation is not specifically limited, but it is preferably 100°C or less, more preferably 80°C or less, and still more preferably 50°C or less. After the mixing is completed, operations such as degassing of the mixture may be optionally performed.

As described above, the polymerizable prepolymer of the resin and the clay dispersion can be mixed according to Step (B).

Next, in Step (C), the polymerizable prepolymer can be polymerized. The method of polymerization is not specifically limited, and it may be conducted according to a commonly used polymerization method of resin.

For the polymerization of polycarbonate resin, an transesterification method is preferably used because of its operability. In the transesterification, for example, a bisphenol compound is added to a mixture containing a carbonic acid diester compound, and sufficiently agitated while heating the system to about 280°C to 300°C, thereby achieving the transesterifying reaction in the fused state. As the catalyst necessary for the transesterification method, one or two or more type(s) of a simple substance, an oxide, a hydroxide, an amide compound, an alcoholate, and a phenolate of an alkali metal or an alkaline-earth metal element, as well as $Sb_2O_3$, ZnO, PbO, an organic titanium compound, and quaternary ammonium salt, may be used.

The polymerization in Step (C) is conducted so that the molecular weight of the obtained polycarbonate resin falls within the predetermined range specified above, i.e., the weight average molecular weight Mw measured at 40°C by gel permeation chromatography (GPC) using tetrahydrofuran (THF) solvent is typically 15,000 to 80,000, and preferably 30,000 to 70,000 in terms of monodisperse polystyrene.

For the polymerization of polyarylate resin, an interfacial polymerization method is preferably used. In the interfacial polymerization method, for example, diphenol dissolved in an alkali aqueous solution and aromatic dicarboxylic acid chloride dissolved in an organic solvent such as halogenated hydrocarbon are reacted with each other in the presence of a catalyst at a normal temperature. One or both of the above-described alkali aqueous solution and the organic solvent is the clay dispersion in which the silane-treated foliated phyllosilicate is dispersed. Alternatively, a method may be preferably performed in which clay dispersion is prepared separately, and added and mixed in an arbitrary stage of the reaction between diphenol dissolved in an alkali aqueous solution and aromatic dicarboxylic acid chloride dissolved in an organic solvent such as halogenated hydrocarbon. As the catalyst for the interfacial polymerization, one or two or more type(s) of the catalysts similar to the above-described catalysts for the transesterification method may be used.

In addition to the interfacial polymerization, a fusion polymerization method can also be used for the polymerization of a polyarylate resin. In an acetate method, which is one of the fusion polymerization methods, diacetylester of diphenol and aromatic dicarboxylic acid are reacted with each other at a high temperature, whereby a polyarylate resin is obtained. During this polymerization, for example, the clay dispersion can be sequentially added in an arbitrary stage in which the fusion viscosity of the polyarylate resin is at a level of allowing a sufficient homogeneous dispersion of the clay dispersion containing the silane-treated foliated phyllosilicate. In an phenyl ester method, which is another of the fusion polymerization methods, diphenol and diphenyl ester of aromatic dicarboxylic acid are reacted with each other at a high temperature, whereby a polyarylate resin is obtained. During this polymerization, the clay dispersion can be sequentially added at a stage similar to that in the above-described acetate method.

The polymerization in Step (C) is conducted so that the molecular weight of the obtained polyarylate resin falls within the predetermined range specified above, i.e., the weight average molecular weight Mw measured at 25°C by gel permeation chromatography (GPC) using chloroform solvent is typically 15,000 to 80,000, and preferably 30,000 to 70,000 in terms of monodisperse polystyrene.

For the polymerization of the thermoplastic polyester resin, for example, a fusion polycondensation method or a solid-phase polymerization method may be used. In the case where a copolymer is obtained using two or more diol compounds, for example, the second diol compound can be added in an arbitrary period during the fusion polycondensation reaction between a dicarboxylic acid and the first diol compound. After the mixing, a further fusion polycondensation reaction can be conducted. Alternatively, the mixing can be sequentially followed by a solid-phase polymerization. In these polymerization reactions, one or two or more catalysts such as a metal oxide, a carbonate, acetate, and alcoholate may be optionally used.

The polymerization in Step (C) is conducted so that the molecular weight of the obtained thermoplastic polyester resin falls within the predetermined range specified above, i.e., the logarithmic viscosity measured at 25°C using a mixture solvent of phenol/tetrachloroethane (5/5 in ratio by weight) is typically 0.3 to 2.0 (dl/g), preferably 0.35 to 2.0 (dl/g), and more preferably 0.37 to 2.0(dl/g), and still more preferably 0.40 to 1.8 (dl/g).

As described above, according to Step (C), the polymerizable prepolymer can be converted into a resin having an increased molecular weight in the presence of the clay dispersion.

The polycarbonate resin composition of the present invention has good mechanical properties, a good deflection temperature under load, and a small anisotropy. Moreover, the surface appearance and transparency are not deteriorated, and the relative density is not significantly increased. The polyarylate resin composition of the present invention has a good mechanical property, a good dimensional accuracy, and a small warpage. Moreover, the surface smoothness and transparency are not deteriorated, and the relative density is not significantly increased. Further, the polyester resin composition of the present invention has a good moldability and dimensional stability. Moreover, the exterior appearance of the molded product and the flowability during molding are not deteriorated. One of the reasons why such desirable characteristic can be obtained is that the silane-treated foliated phyllosilicate is homogeneously dispersed in the resin in the form of numerous tiny thin-plate shape particles. The state of dispersion is represented by either or both of: the average layer thickness (or the average layer thickness and the maximum layer thickness) of the silane-treated foliated phyllosilicate as an indicator, which falls within the range described above; and the number of dispersed particles and the average aspect ratio, which falls within the range described above. For the polyester resin composition according to the present invention, the state of dispersion is further represented by one or more conditions of the rheology characteristics, i.e., $\eta_e$-3$\eta$, $\Delta\eta_e$ and $J_{e0}\cdot\eta_0$ fall within the range described above.

The state of dispersion of the silane-treated foliated phyllosilicate may be controlled by one or more steps selected from Step (A) and Step (B) in the method of producing the resin composition described above as well as the step of preparing the silane-treated foliated phyllosilicate. The factors to be considered in the control include: in Step (A), the amount of the organo-silane compound, processing conditions (e.g., time, temperature, agitation force, etc.), and if a polar solvent is used, type of the polar solvent, proportion, agitation conditions, and the like; and in Step (B), type and molecular weight of the polymerizable prepolymer, the addition rate of the clay dispersion, and the like.

In the step of preparing the silane-treated foliated phyllosilicate in the dispersion medium (it may be the direct method in Step (A)), if the agitation force and shear force at dispersing the swellable silicate are constant, the swelling/exfoliating state of the swellable silicate may be changed depending on the type of dispersion medium, and if a plurality of types of dispersion media are used, depending also on the mixing ratio and mixing order of the dispersion media. For example, in the case where montmorillonite is used as the swellable silicate, the montmorillonite is swollen and exfoliated to result in a state approximately close to the unit layer if the dispersion medium is water alone. Therefore, by reacting, while keeping that state, an organo-silane compound which has a group with a high polarity, e.g., an amino group, a mercapto group, or a nitrile group, a clay dispersion can be prepared in which the silane-treated foliated phyllosilicate with substantially the same thickness as that of the unit layer is dispersed. By mixing the above-described clay dispersion with a polymerizable prepolymer in Step (B), the silane-treated foliated phyllosilicate can be formed into the state in which about 5 to about 30 sheets of the unit layers are laminated. On the other hand, in the case where a mixture solvent of water and a polar solvent such as ethanol, tetrahydrofuran (THF), methylethylketone (MEK), pyridine, N,N-dimethylformamide (DMF), N,N-dimethylacetoamide (DMAc), or N-methylpyrrolidone (NMP) is used for the dispersion medium, and in the case where a montmorillonite is dispersed in the polar solvent and then water is added, the montmorillonite is exfoliated and fractionated to result in the state in which several sheets to a hundred and tens of sheets (e.g., about 5 sheets to about 150 sheets, preferably about 10 sheets to about 100 sheets) of unit layers are laminated. By reacting the organo-silane compound in that state, a clay dispersion is prepared in which the silane-treated foliated phyllosilicate having a thickness approximately corresponding to several sheets to a hundred and tens of sheets (e.g., about 5 sheets to about 150 sheets, preferably about 10 sheets to about 100 sheets) is dispersed. By performing the succeeding steps in the method for producing the resin composition so as to maintain that laminating state, the state of dispersion of the silane-treated foliated phyllosilicate can be controlled.

According to the substitution method in Step (A) (the method of substituting the dispersion medium used in preparation of the silane-treated foliated phyllosilicate with another desirable dispersion agent), the state of dispersion of the silane-treated foliated phyllosilicate in the clay dispersion may be changed depending on the type of dispersion medium further added, and if a plurality of types of dispersion media are used, depending also on the mixing ratio and mixing order of the dispersion media. For example, when adding a polar solvent which has a low affinity to the functional group of the organo-silane compound to a dispersion in a water matrix containing a silane-treated foliated phyllosilicate in the state of a unit layer, and then substituting water with the polar solvent, the silane-treated foliated phyllosilicate having been in the state of unit layers aggregates and is laminated in the number of several sheets to tens of sheets (e.g., about 5 sheets to about 50 sheets). By performing the succeeding steps of the method for producing the resin composition so as to maintain that laminating state, the state of dispersion of the silane-treated foliated phyllosilicate can be controlled.

In Step (B), the state of dispersion of the silane-treated foliated phyllosilicate may be changed depending on the type, molecular weight, and the like of the polymerizable prepolymer mixed with the clay dispersion. By performing the succeeding steps of the method for producing the resin composition so as to maintain that laminating state, the state of dispersion of the silane-treated foliated phyllosilicate can be controlled.

(Formulation and utility of the resin composition)

The resin composition of the present invention comprises polycarbonate resin, polyarylate resin, or thermoplastic polyester resin as the resin component. An arbitrary combination of these resins, e.g., a combination of polycarbonate and polyarylate, a combination of polycarbonate and thermoplastic polyester, and a combination of polyarylate and thermoplastic polyester, may also be preferably used. A shock resistance improving agent can be added, if necessary, to the resin composition of the present invention, such as polybutadiene, butadienestyrene copolymer, acrylic rubber, ionomer, ethylenepropylene copolymer, ethylene-propylene-diene copolymer, natural rubber, chlorinated butyl rubber, homopolymer of $\alpha$-olefin, copolymer of two or more types of $\alpha$-olefin (any copolymer such as random, block, or graft copolymer and a mixture thereof may be included), or a thermoplastic elastomer such as a olefin type elastomer. These agents may be denatured with an acid compound such as maleic anhydride, or an epoxy compound such as glycidyl methacrylate. Furthermore, within a limit which does not deteriorate the properties such as mechanical properties and moldability, one or two or more type(s) of other arbitrary resins may be combined and used, for example, thermoplastic resins such as polyester carbonate resin, liquid crystal polyester resin, polyolefin resin, styrene type resin (especially, styrene type resin reinforced by a rubber-type polymer), polyamide resin, polyphenylenesulfide resin, polyphenyleneether resin, polyacetal resin, polysulfone resin, polyimide, and polyetherimide, and thermosetting resins such as unsaturated polyester resin, epoxy resin, and phenol novolak resin.

Furthermore, an additive such as a pigment, a dye, a heat stabilizer, an antioxidant, an ultraviolet absorber, a light stabilizer, a lubricant, a plasticizer, a flame resistant agent, and an antistatic agent, may be added to the resin composition of the present invention, depending on the purpose thereof.

Injection molding and heat press molding can be suitably used for producing a molded product from the polycarbonate resin composition of the present invention. The polycarbonate resin composition may be used for blow molding. The resin composition of the present invention may be suitably used for extrusion molding.

The thermoplastic polyester resin composition of the present invention is particularly suitable for materials used for injection molding. As described above, the thermoplastic polyester resin composition is characterized by its rheology characteristics, and specifically, characterized by a difference ($\eta_e$-3$\eta$) between an extensional viscosity $\eta_e$ and the triple value of a shear viscosity $\eta$ is 300 Pa·s or more; a difference ($\Delta\eta_e$) of values of the extensional viscosity $\eta_e$ measured at different rates of strain is 500 Pa·s or more; and/or a product $J_{e0}\cdot\eta_0$ of equilibrium compliance $J_{e0}$ and zero shear viscosity $\eta_0$ is 0.8 seconds or more. In such a thermoplastic polyester resin composition, moldabilities such as releasability and molding cycle are improved, and particularly prominent effects are achieved when the resin composition is used for injection molding.

The resin composition of the present invention can also be used for producing a film which maintains transparency and has a good mechanical properties. The polyester resin composition is preferably obtained as a biaxially stretched film. Such a molded product and a film as described above have an excellent external appearance, mechanical properties, and thermal deformation resistance property, etc., and therefore they are suitably used for automobile parts, household electric appliances parts, precision machine parts, household daily necessities, wrapping/package materials, electromagnetic base, and other general industrial materials.

(Examples)

Examples of the present invention will now be described in more detail. The present invention is not limited by these examples.

The following is a list of the main materials used in the examples and the comparative examples. The raw materials were not purified unless otherwise noted.

(Materials for polycarbonate resin)

* dimethyl carbonate: Dimethyl carbonate by Wako Pure Chemical Industries, Ltd. (hereinafter, referred to as DMC) was used.

* diethyl carbonate: Diethyl carbonate by Wako Pure Chemical Industries, Ltd. (hereinafter, referred to as DEC) was

used.

* bisphenol A: Bisphenol A by Mitsui Kagaku Co. Ltd. (hereinafter, referred to as BPA) was used.

* polycarbonate resin: Tafrone A2200 by Idemitsu Petrochemical Co., Ltd. (hereinafter, referred to as PC resin) was used.

(Materials for polyarylate resin)

* isophthaloyl dichloride: Isophthaloyl dichloride by Wako Pure Chemical Industries, Ltd. (Wako standardized) (hereinafter, referred to as IPC) was used.

* terephthaloyl dichloride: Terephthaloyl dichloride by Wako Pure Chemical Industries, Ltd. (Wako 1st grade) (hereinafter, referred to as TPC) was used.

* bisphenol A: 2,2'-bis(4-hydroxyphenyl)-propane by Wako Pure Chemical Industries, Ltd. (Wako 1st grade) (hereinafter, referred to as bisphenol A) was used.

* p-t-butylphenol: P-t-butylphenol by Wako Pure Chemical Industries, Ltd. (Wako 1st grade) (hereinafter, referred to as ptBP) was used. The ptBP was used as a molecular weight controlling agent.

(Materials for thermoplastic polyester resin)

* bishydroxyethyl terephthalate: NISSO-BHET by Nisso Maruzen Chemical K.K. (hereinafter, referred to as BHET) was used.

* dimethyl terephthalate: Wako special grade by Wako Pure Chemical Industries, Ltd. (hereinafter, referred to as DMT) was used.

* ethylene glycol: Monoethylene glycol by Nippon Shokubai Kagaku Kogyo Co., Ltd. (hereinafter, referred to as EG) was used.

* 1,4-butanediol: 1,4-butanediol by Tosoh Corporation (hereinafter, referred to as 1,4-BD) was used.

* polyethylene terephthalate: PBK2 by Kanebo, Ltd., logarithmic viscosity ($\eta_{inh}$)=0.63 (dl/g), (hereinafter, referred to as PET) was used.

(Materials for silane-treated foliated phyllosilicate)

* swellable silicate:

  Montmorillonite (trade name: Kunipia F, Kunimine Kogyo K.K., basal spacing: 13 Å) (hereinafter, referred to as natural montmorillonite) was used.
  swellable mica (trade name: ME100, Co-op Chemical Co., Ltd., basal spacing: 12 Å) (hereinafter, referred to as swellable mica) was used.
  bentonite (trade name: Bengel HVP, Houjun Yoko K.K., basal spacing: 13 Å) (hereinafter, referred to as natural bentonite) was used.

* γ-(2-aminoethyl)aminopropyl trimethoxysilane: A-1120 by Nippon Unicar Co., Ltd. (hereinafter, referred to as A1120).

* γ-(polyoxyethylene)propyl trimethoxysilane: A-1230 by Nippon Unicar Co., Ltd. (hereinafter, referred to as A1230).

* γ-aminopropyl trimethoxysilane: A-1110 by Nippon Unicar Co., Ltd. (hereinafter, referred to as A1110) was used.

* γ-methacryloxypropyl trimethoxysilane: A-174 by Nippon Unicar Co., Ltd. (hereinafter, referred to as A174) was used.

* γ-glycidoxypropyl trimethoxysilane: A-187 by Nippon Unicar Co., Ltd. (hereinafter, referred to as A187)

(Other materials)

* glass fiber: T-195H by Nippon Electric Glass Co., Ltd. (hereinafter, referred to as T195H) was used.

* tetrahydrofuran: Tetrahydrofuran by Wako Pure Chemical Industries, Ltd. (hereinafter, referred to as THF) was used.

* methylene chloride: Methylene chloride (Wako special grade) by Wako Pure Chemical Industries, Ltd. (hereinafter, referred to as methylene chloride) was used.

* polyethylene glycol diglycidyl ether: Polyethylene glycol diglycidyl ether by Sakamoto Yakuhin Kogyo K.K. (trade name: SR8EG) (hereinafter, referred to as PEGDG) was used.

* methanol: Methanol Wako Special Grade by Wako Pure Chemical Industries, Ltd. (hereinafter, referred to as MeOH) was used.

The evaluation methods in the examples and the comparative examples will be described below.

(FT-IR)

1.0 g of the silane-treated foliated phyllosilicate was added to 50 ml of tetrahydrofuran (THF), and agitated for 24 hours. After washing and removing the organo-silane compound adsorbed thereto, the supernatant was separated by centrifugation. This procedure of washing is repeated three times. After the wash, about 1 mg of the sufficiently dried silane-treated foliated phyllosilicate and about 200 mg of KBr powder were sufficiently mixed in a mortar. Thereafter, a KBr disk for measurement was produced using a desktop press molding machine. The disk was then subjected to measurement by a transmission method using an infrared spectroscope (Shimazu Corporation, 8100M). An MCT detector cooled with liquid nitrogen was used as a detector, setting resolution to 4 $cm^{-1}$ and the number of scannings to 100 times.

(Measurement of state of dispersion)

The state of dispersion of the silane-treated foliated phyllosilicate was measured as follows using TEM.

A super-thin segment with a thickness of 50 to 100 μm was used. The state of dispersion of the silane-treated foliated phyllosilicate was observed and photographed using a transmission electron microscope (JEOL Ltd., JEM-1200EX) with a magnification of 40,000 to 1,000,000 times and an acceleration voltage of 80 kV. In the TEM photograph, a region where 100 or more dispersed particles exist was selected, and the number of particles ([N] value), layer thickness, and layer length in the region were measured by manual measurement using a scaled ruler, or by processing using an image analysis apparatus PIAS III manufactured by Inter Quest, if necessary.

The average aspect ratio was represented by the numerical average value of the ratio of layer length to layer thickness of each particle of the silane-treated foliated phyllosilicate.

The [N] value was measured as follows. First, the number of the particles of the silane-treated foliated phyllosilicate existing in the selected region was obtained on the TEM image. On the other hand, the ash content ratio of the resin composition originating from the silane-treated foliated phyllosilicate was measured. The above-described number of the particles was then divided by the ash content ratio. The [N] value was represented by the value converted to the value per an area of 100 $\mu m^2$.

The average layer thickness was represented by the numerical average of the layer thickness of each particle of the silane-treated foliated phyllosilicate, and the maximum layer thickness was represented by the maximum value of the layer thickness of each particle of the silane-treated foliated phyllosilicate.

When the dispersed particles were so large that it was inappropriate to observe by TEM, the [N] value was

obtained using an optical microscope (Optical microscope BH-2 manufactured by Olympus Optical Co., Ltd.) in a method similar to that described above. The sample was fused, if necessary, at 280 to 320°C using Hot Stage THM600 manufactured by LINKAM, and the state of the dispersed particles was measured in a fused state.

The aspect ratio of the dispersed particles which were not dispersed in a plate shape was represented by the value of (the major axis)/(the minor axis). Herein, the major axis means, assuming a rectangle having the minimum area among the rectangles circumscribing the image of the subject particle observed by a microscope or the like, the longer side of that rectangle. The minor axis means the shorter side of the rectangle having the minimum area.

(Measurement of the basal spacing by the small angle X-ray diffraction method (SAXS))

The basal spacing were measured, using an X-ray generator (RU-200B manufactured by Rigaku Denki Co., Ltd.) under the measurement conditions of a target CuK $\alpha$ ray, an Ni filter, a voltage of 40 kV, a current of 200 mA, a scanning angle 2$\theta$ of 0.2 to 16.0°, and a step angle of 0.02°.

The basal spacing was calculated by applying the small angle X-ray diffraction peak angle value to the Bragg's equation. When confirmation of the small angle X-ray peak angle value was difficult, it was regarded to be difficult because the layers had been sufficiently exfoliated and the crystalline property had substantially disappeared, or because the peak angle value was about 0.8° or less. In that case, the evaluation result of the basal spacing was regarded to be >100 Å.

(Deflection temperature under load)

The polycarbonate resin composition was dried (120°C, 5 hours). The dried resin composition was injection-molded using an injection molding machine (IS-75E manufactured by Toshiba Machine Co., Ltd.) having a clamping force of 75 t, under the conditions of a resin temperature of 300°C, gauge pressure of about 10 MPa, and injection speed of about 50%, thereby producing a test piece with a size of about 10×100×6 mm. The deflection temperature under load of the obtained test piece (referred to as HDT in the tables below) was measured in accordance with ASTM D-648.

For the polyester resin composition, the measurement was conducted similarly to the above, except that the drying temperature was set at 140°C and the resin temperature during the injection molding was set at 250°C to 280°C.

(Flexural property)

The polycarbonate resin composition was dried (120°C, 5 hours). The dried resin composition was injection-molded using an injection molding machine(IS-75E manufactured by Toshiba Machine Co., Ltd.) having a clamping force of 75 t, under the conditions of a resin temperature of 300°C, gauge pressure of about 10 MPa, and injection speed of about 50%, thereby producing a test piece with a size of about 10×100×6 mm. The flexural strength and flexural modulus of the obtained test piece were measured in accordance with ASTM D-790.

For the polyarylate resin composition, the measurement was conducted similarly to the above, except that the resin temperature during the injection molding was set at 320°C.

For the polyester resin composition, the measurement was conducted similarly to the above, except that the drying temperature was set at 140°C and the resin temperature during the injection molding was set at 250°C to 280°C.

(Dimensional accuracy; anisotropy)

For the polycarbonate resin composition and the polyarylate resin composition, anisotropy was evaluated as the ratio of coefficient of linear expansion between MD direction and TD direction, using JIS No.1 dumbbell-shaped test pieces with a thickness of about 3 mm produced under the conditions similar to those in the flexural property evaluation described above. As the ratio is the closer to 1, anisotropy becomes the smaller and the resin composition is more isotropic, i.e., the dimensional accuracy becomes better. The coefficient of linear expansion was measured as follows.

About 7 mm × 7 mm of the center portion of the above-described dumbbell-shaped test piece was cut out. The test piece was kept at 20°C for 5 minutes using SSC-5200 and TMA-120C manufactured by Seiko Denshi K.K., and then the temperature was increased from 20°C to 150°C at a rate of 5°C/min. The coefficient of linear expansion was calculated within the range of 30 to 120°C.

(warpage)

The polycarbonate resin composition was dried (120°C, 5 hours), and then injection-molded using an injection

molding machine (IS-75E manufactured by Toshiba Machine Co., Ltd.) having a clamping force of 75 t under the conditions of a mold temperature of 80°C, resin temperature of 300°C, gauge pressure of about 10 MPa, and injection speed of about 50%, thereby producing a flat plate-like test piece with a size of about 120×120×1 mm. The above-described flat plate-like test piece was put on a flat surface, and the degree of warpage was observed. Specifically, one of the four corners of the test piece was pressed to the flat surface, and the maximum value of the distance between each of the other three corners and the flat surface was measured using a vernier caliper or the like. Each of the four corners was pressed, and the average value of the obtained warpage values was calculated.

For the polyarylate resin composition, the measurement was conducted similarly to the above, except that the resin temperature during the injection molding was set at 320°C.

For the polyester resin composition, the measurement was conducted similarly to the above, except that the drying temperature was set at 140°C, mold temperature during the injection was 50°C and the resin temperature during the injection molding was set at 250°C to 280°C.

(Transparency)

For the polycarbonate resin composition and the polyarylate resin composition, the transparency was evaluated as haze (cloudiness value) using JIS No.1 dumbbell-shaped test pieces with a thickness of about 3 mm produced under the conditions similar to those in the evaluation of dimensional accuracy.

The haze was measured using a turbidimeter NDH-Σ80 made by Nippon Denshi Kogyo Co., Ltd., in accordance with JIS K7103.

(Surface appearance/surface smoothness)

For the polycarbonate resin composition, the polyarylate resin composition, and polyester resin composition, surface appearance, i.e., surface smoothness, was evaluated as the center line average roughness using JIS No.1 dumbbell-shaped test pieces with a thickness of about 3 mm produced under the conditions similar to those in the dimensional accuracy evaluation.

The center line average roughness was measured using a surface roughness meter, Surfcom 1500A, manufactured by Tokyo Seimitsu Co., Ltd.

(GPC)

About 4 mg of the polyarylate resin composition was dissolved in about 6 g of chloroform. After filtering with a 0.5 μm filter (made of PTFE), the measurement was conducted using GPC manufactured by WATERS under the conditions of a column temperature of 40°C, chloroform for the carrier solvent, a flow rate of 1 mL/min, and an injection amount of 10 μL, whereby the weight average molecular weight (Mw) in polystyrene conversion was calculated.

(Ash content ratio)

For the polycarbonate resin composition, the polyarylate resin composition, and polyester resin composition, the ash content ratio originating from the silane-treated foliated phyllosilicate was measured according as JIS K7052.

(Production time)

For the polyester resin composition, the start of the production was defined as the time when the preparation of the silane-treated foliated phyllosilicate-water dispersion was started at Step (A). The completion of the production was defined as the time when the logarithmic viscosity reached to 0.60 in the PET system, and to 0.80 in the PBT system. The required time was measured and regarded as the production time.

(Logarithmic viscosity)

After drying the obtained polyester resin composition (140°C, four hours), about 100 mg of the dried polyester resin composition was precisely measured and 20 ml of a mixture solvent of a phenol/1,1,2,2-tetrachloroethane (ratio by weight:1/1) was added thereto and dissolved at 120°C. The viscosity of the solution was measured using an Ubbelohde viscometer and an automation viscosity measuring apparatus (Viscotimer manufactured by Lauda), and at a measurement temperature of 25°C for the PET system and a measurement temperature of 20°C for the PBT system. The logarithmic viscosity ($\eta_{inh}$) was obtained from the following equation:

$$\eta_{inh}=\{\ln(t/t_0)\}/C$$

where t is the value of the solution, $t_0$ is the value of the mixture solvent alone, and C is the concentration (g/dl).

The logarithmic viscosity of oligomer was measured in a similar manner to the above.

(Equilibrium compliance $J_{e0}$ and zero shear viscositg $\eta_0$)

The polyester resin composition was molded by thermopressing under the conditions of a temperature of 280°C, and a pressure of $4.9\times10^6$N/m$^2$, thereby obtaining a sheet with a thickness of 1.4 mm. A disc having a diameter of 25 mm was cut out from the obtained sheet and served as the sample for measurement.

Next, using a fusion viscoelasticity measurement apparatus of stress control type (Rheometric Scientific, DSR-200), the above-described sample was sandwiched between the cone and plate, and melted at 280°C under nitrogen atmosphere. Thereafter the sample was held still for 5000 seconds, and then twisted in a clockwise direction with a constant stress of 50 N/m$^2$. The creep compliance was measured at 280°C.

The creep compliance J(t) measured as described above was represented by the equation (12):

$$J(t)=\gamma(t)/\sigma \qquad (12).$$

The creep curve of the creep compliance J (t) was then approximated by a straight line as in the equation (13):

$$J(t)=J_{e0}+t/\eta_0 \qquad (13).$$

From the intercept of the straight line, the equilibrium compliance $J_{e0}$ was calculated, and from the gradient of the straight line, the zero shear viscosity $\eta_0$ was calculated.

(Extensional viscosity $\eta_e$ and shear viscosity $\eta$)

Using a twin capillary rheometer configured by arranging two capillary rheometers (manufactured by Rosand Precision), a die having an $L_1$=16 mm and $D_1$=1 mm (referred to as a long die) and a die having an $L_2$=0.25 mm and $D_2$=1 mm (referred to as a short die) are attached, respectively, to each of the capillary rheometers. The barrels and the dies are set at 280°C and the same amount of the polyester resin composition was supplied to each of them and fused. The fused polyester resin composition was then extruded simultaneously, and the values of the pressure loss $p_1$ and $p_2$ were measured at a shear rate within the range of 20 to 200 (1/s). From the obtained values of the pressure loss, the pressure loss $p_0$ of a virtual die with a length of 0 was calculated using the equation (6):

$$p_0=(p_2\cdot L_1-p_1\cdot L_2)/(L_1-L_2) \qquad (6)$$

where $p_1$ is the pressure loss measured with the long die, $p_2$ is a pressure loss measured with the short die, $L_1$ is the length of the long die, and $L_2$ is the length of the short die.

The extensional viscosity $\eta_e$ and rate of strain $\dot{\varepsilon}$ are calculated by the equation (7) and (8), respectively:

$$\eta_e=[9(n+1)^2p_0^2]/32\eta\dot{\gamma}^2 \qquad (7)$$

$$\dot{\varepsilon}=4\eta\dot{\gamma}^2/3(n+1)p_0 \qquad (8),$$

where $\dot{\gamma}$ is the shear rate and $\eta$ is the shear viscosity. n is the power-law index, which is defined by the equation (9):

$$\eta=c\dot{\gamma}^{n-1} \qquad (9)$$

where c is a constant.

The relationship between the shear rate and the shear viscosity is approximated by the equation (10):

$$\eta=a\dot{\gamma}^{p} \qquad (10),$$

using the least-squares method, thereby obtaining a and p. The relationship between the rate of strain and the extensional viscosity was approximated by the equation (11):

$$\eta_e=b\dot{\varepsilon}^{q} \qquad (11),$$

using the least-squares method, thereby calculating b and q.

The difference ($\eta_e$-3$\eta$) between $\eta_e$ at $\dot{\varepsilon}$=100 (1/s) and 3$\eta$ at $\dot{\gamma}$=100 (1/s) is the index of the strain hardening property according to the present invention. Specifically, it was calculated by

$$b\cdot 100^{q}-3a\cdot 100^{p}.$$

(Releasability)

The polyester resin composition of the present invention was dried (140°C, 5 hours), and then injection-molded using an injection molding machine (IS-75E manufactured by Toshiba Machine Co., Ltd.) having a clamping force of 75 t, under the conditions of a resin temperature of 250 to 280°C, gauge pressure of about 10 MPa, injection speed of about 50%, and the cooling time after resin filling of 20 seconds, thereby obtaining a flat plate-shaped test piece with a size of about 120×120×1 mm.

The die temperature is set at 60, 80, 100, or 120°C, and the releasability at respective temperature was evaluated by classifying into three ranks according to the following legend:

○: released without any difficulty by ejector pins;
Δ: unable to release by ejector pins, so that it was released by hand, thereby obtaining a flat plate-shaped sample piece; and
×: unable to release by ejector pins, so that it was released by hand, causing the sample piece to be significantly deformed.

(Cooling time)

As the index for the duration of the molding cycle, the cooling time after the resin was filled into the mold by injection molding was used. A shorter cooling time is preferable since it achieves a shorter duration of the molding cycle.

The cooling time was evaluated as follows. First, the polyester resin composition, which had been dried at 140°C for five hours, was injection-molded using an injection molding machine (IS-75E manufactured by Toshiba Machine Co., Ltd.) having a clamping force of 75 t, under the conditions of a resin temperature of 250 to 280°C, gauge pressure of about 10 MPa, and injection speed of about 50%, thereby obtaining a test piece with a size of about 10×100×6 mm. The cooling time which was required during the molding in order to prevent a deformation, was measured. The mold temperature was set at 60, 80, 100, or 120°C.

In the following examples, the advantages of the polycarbonate resin composition according to the present invention will be described in comparison with comparative examples.

(Example 1-1)

Step (A)

In 7000 g of ion exchanged water, 125 g of natural montmorillonite was added and mixed by agitation for 5 minutes at 5000 rpm using a wet mill by Nippon Seiki K.K. Added thereto was 14 g of A1120, and by further agitation under the conditions shown in Table 1-1, the silane-treated foliated phyllosilicate was prepared. The confirmation of silane-treated foliated phyllosilicate was performed by measuring the basal spacing of the separated, dried, and ground solid component by SAXS, and by measuring the absorption bands of functional groups originating from the organosilane compound in the sample washed with THF, by FT-IR. The results of this are shown in Table 1-1 (the results of

Examples 1-2 to 1-6 are also shown in Table 1-1). 1000 g of DEC was then added, and after sufficient mixing, the water was removed by heating, i.e., by a substitution method, whereby the clay dispersion containing the silane-treated foliated phyllosilicate and DEC (referred to as ASi-Mol/DEC) was prepared. The basal spacing of the silane-treated foliated phyllosilicate in the clay dispersion was >100 Å.

Step (B)

2240 g of BPA and 2000 g of DMC, and 20 g of dibutyl tin oxide were provided in an autoclave, and by reacting them by bubbling with a dry nitrogen gas at a temperature of 160°C and a pressure of 7 kg/cm$^2$ (68.6 MPa), bismethylcarbonic acid ester of BPA (referred to as the polymerizable prepolymer a) was prepared. The temperature was kept at 230°C to 240°C, to which the clay dispersion ASi-Mo1/DEC prepared in Step (A) was sequentially added and mixed while strongly agitating at 180 rpm. The addition rate of the clay dispersion is about 1300 g/hour.

Step (C)

Then, by subjecting the resultant mixture to fusion polycondensation at a reaction temperature of 230°C to 240°C and at 1 torr (0.133 MPa) or less, a polycarbonate resin composition containing the silane-treated foliated phyllosilicate was obtained, which was then evaluated. The ash content ratio and the properties are shown in Table 1-2 (the results of Examples 1-2 to 1-6 are also shown in Table 1-2).

(Example 1-2)

Example 1-2 was conducted similarly to Example 1, except that in Step (A) the amount of A1120 was set at 8 g and the clay dispersion (ASi-Mo2/DEC) was prepared by a substitution method. A polycarbonate resin composition containing the silane-treated foliated phyllosilicate was obtained, which was then evaluated.

(Example 1-3)

Example 1-3 was conducted similarly to Example 1, except that in Step (A), 22 g of A1230 (hydrolyzed at pH 3.0 in advance) instead of 14 g of A1120 was used and the clay dispersion (ESi-Mo/DEC) was prepared by a substitution method (and the addition rate of the clay dispersion was about 1000 g/hour). A polycarbonate resin composition containing the silane-treated foliated phyllosilicate was obtained, which was then evaluated.

(Example 1-4)

In Step (A), a swellable mica was used instead of montmorillonite and the amount of A1120 was changed to 28 g to prepare the clay dispersion (ASi-Mi/DEC) by a substitution method (in this case, the basal spacing of the silane-treated foliated phyllosilicate in the clay dispersion was 65 Å). Other than that, Example 1-4 was conducted similarly to Example 1 (however, the addition rate of the clay dispersion was about 800 g/hour). A polycarbonate resin composition containing the silane-treated foliated phyllosilicate was obtained, which was then evaluated.

(Example 1-5)

Step (A)

Asi-Mo1/DEC was prepared similarly to Example 1 by a substitution method.

Step (B)

BPA (2240 g), which is a reactive monomer of the polycarbonate resin, the above clay dispersion ASi-Mo1/DEC and 20 g of dibutyl tin oxide are provided in an autoclave, and then mixed by bubbling with dry nitrogen gas at a temperature of 160°C and at a pressure of 7 kg/cm$^2$ (68.6 MPa), whereby the mixture was reacted so as to prepare bisethylcarbonic acid ester of BPA containing the silane-treated foliated phyllosilicate.

Step (C)

Then, by conducting fusion polycondensation at a reaction temperature of 230°C to 240°C and under reduced pressure of 1 torr (0.133 MPa) or less, a polycarbonate resin composition containing the silane-treated foliated phyllosilicate was obtained, which was then evaluated.

(Example 1-6)

Step (A)

In 3500 g of ion exchanged water, 160 g of Kunipia F was added and mixed by agitation for 5 minutes at 5000 rpm using a wet mill by Nippon Seiki K.K. Then, 30 g of A1230 was added, and by further agitation under the conditions shown in Table 1-1, the silane-treated foliated phyllosilicate-water dispersion containing the silane-treated foliated phyllosilicate and water was prepared (The confirmation of the silane-treated foliated phyllosilicate was performed by measuring the basal spacing of the separated, dried, and ground solid component by SAXS, and by measuring the absorption bands of functional groups originating from the organo-silane compound in the sample washed with THF by FT-IR). The results of this are shown in Table 1-1.

Step (B)

2240 g of BPA and 2620 g of DEC, and 20 g of dibutyl tin oxide were provided in an autoclave, and they were sufficiently mixed at a temperature of about 115°C. The temperature was kept at about 115°C and the silane-treated foliated phyllosilicate-water dispersion prepared in Step (A) was then sequentially added and mixed while strongly agitating at about 180 rpm. The addition rate of the clay dispersion was about 1000 g/hour. After the addition, the agitation was continued another about 4 hours so as to evaporate and remove water.

Step (C)

By conducting a reaction at a temperature of 160°C and a pressure of 7 kg/cm$^2$ (68.6 MPa), and then subjecting to fusion polycondensation at a reaction temperature of 230°C to 240°C and at 1 torr (0.133 MPa) or less, a polycarbonate resin composition containing the silane-treated foliated phyllosilicate was obtained, which was then evaluated.

(Comparative Example 1-1)

The polycarbonate resin was obtained by a method similar to that in Example 1-1, but without using a clay dispersion. The resultant resin was then evaluated. The results are shown in Table 1-3 (The results of Comparative examples 1-2 to 1-5 are also shown in Table 1-3)

(Comparative Example 1-2)

The polycarbonate resin composition was obtained by a method similar to that in Example 1, except that 125 g of natural montmorillonite was used instead of the clay dispersion ASi-Mo1/DEC. The resultant resin composition was then evaluated.

(Comparative example 1-3)

14 g of A1120 was directly sprayed on 125 g of natural montmorillonite using a sprayer, and then by mixing for an hour, the montmorillonite was treated with silane. The basal spacing of the silane-treated natural montmorillonite was 13 Å. This montmorillonite was washed with THF and then subjected to FT-IR measurement. As a result, the absorption bands originating from primary amino group, secondary amino group, and methylene group were observed.

A polycarbonate resin composition was obtained by a method similar to that in Example 1, except that the above-described silane-treated natural montmorillonite was used instead of the clay dispersion ASi-Mo1/DEC. The resultant polycarbonate resin composition was then evaluated.

(Comparative Example 1-4)

125 g of montmorillonite and 1000 g of DEC were agitated and mixed for 5 minutes at 5000 rpm using a wet mill, so that a mixture liquid was obtained.

A polycarbonate resin composition was obtained by a method similar to that in Example 1, except that the above mixture liquid was used instead of the clay dispersion ASi-Mo1/DEC. The resultant polycarbonate resin composition was then evaluated.

(Comparative Example 1-5)

2500 g of PC resin and 250 g of T195H were subjected to fusion kneading using a biaxial extruder (The Nippon Steel Works, Ltd., LABOTEX 30, at a set temperature of 270 to 290°C and the number of rotations of 100 rpm), and a resin composition was obtained. The resultant resin composition was then evaluated.

(Table 1-1)

| Examples | | 1-1 | 1-2 | 1-3 | 1-4 | 1-5 | 1-6 |
|---|---|---|---|---|---|---|---|
| Ion exchanged water | g | 7000 | 7000 | 7000 | 7000 | 7000 | 3500 |
| Natural montmorillonite | | 125 | 125 | 125 | | 125 | 160 |
| Swellable mica | | | | | 125 | | |
| A1120 | | 14 | 8 | | 28 | 14 | |
| A1230 | | | | 22 | | | 30 |
| Agitation condition: rotation | rpm | 5000 | 5000 | 5000 | 6000 | 5000 | 5000 |
| Agitation condition: time | hr | 1.5 | 1.5 | 2.5 | 3.0 | 1.5 | 1.5 |
| Basal spacing of isolated clay composite | Å | 26 | 23 | 22 | 17 | 26 | 23 |
| Functional group measured by FT-IR | | primary amino group, secondary amino group, methylene group | primary amino group, secondary amino group, methylene group | ether group, methylene group | primary amino group, secondary amino group, methylene group | primary amino group, secondary amino group, methylene group | ether group, methylene group |

(Table 1-2)

| Examples | | | | 1-1 | 1-2 | 1-3 | 1-4 | 1-5 | 1-6 |
|---|---|---|---|---|---|---|---|---|---|
| Step (A) | Ion exchanged water | | g | 7000 | 7000 | 7000 | 7000 | 7000 | 3500 |
| | Natural montmorillonite | | g | 125 | 125 | 125 | | 125 | 160 |
| | Swellable mica | | g | | | | 125 | | |
| | A1120 | | g | 14 | 8 | | 28 | 14 | |
| | A1230 | | g | | | 22 | | | 30 |
| | DEC | | g | 1000 | 1000 | 1000 | 1000 | 1000 | |
| | Clay dispersion | | abbreviation | ASi-Mo1 /DEC | ASi-Mo2 /DEC | ESi-Mo /DEC | ASi-Mi /DEC | ASi-Mo1 /DEC | ESi-Mo1 /water |
| | | | basal spacing of the silane-treated foliated phyllosilicate(Å) | >100 | >100 | >100 | 65 | >100 | >100 |
| Step (B) | Polymerizable prepolymer | | a(*1) | ○ | ○ | ○ | ○ | | |
| | | | b(*2) | | | | | ○ | |
| | | | c(*3) | | | | | | ○ |
| | Method of mixing the prepolymer and clay dispersion | | mixing by sequential addition(*4) | ○ | ○ | ○ | ○ | | ○ |
| | | | mixing by single addition(*5) | | | | | ○ | |
| | Addition rate of the clay dispersion | | g/hour | 1300 | 1300 | 1000 | 800 | — | 1000 |
| Step(C) | | | | fusion polycondensation | | | | | |
| Ash content ratio | | | wt% | 4.8 | 4.8 | 4.8 | 4.9 | 4.8 | 4.9 |
| Average layer thickness | | | Å | 131 | 204 | 258 | 388 | 145 | 361 |
| Maximum layer thickness | | | Å | 438 | 625 | 775 | 1563 | 450 | 1285 |
| Number of dispersed particles | | | /wt%·100 $\mu^2$ | 103 | 74 | 70 | 38 | 98 | 42 |
| Aspect ratio | | | | 152 | 98 | 78 | 48 | 138 | 55 |
| Flexural strength | | | MPa | 139 | 131 | 131 | 125 | 138 | 125 |
| Flexural modulus | | | MPa | 4080 | 3650 | 3610 | 3310 | 4010 | 3390 |
| HDT | | | °C | 148 | 144 | 143 | 141 | 146 | 142 |
| Coefficient of linear expansion | | MD | /°C × $10^{-5}$ | 5.32 | 5.64 | 5.88 | 6.02 | 5.34 | 6.00 |
| | | TD | | 5.33 | 5.66 | 5.91 | 6.06 | 5.35 | 6.03 |
| Anisotropy | | MD/TD | | 0.998 | 0.996 | 0.995 | 0.993 | 0.998 | 0.995 |
| Warpage | | | | small | small | small | small | small | small |
| Transparency(Haze) | | | % | 4.3 | 4.5 | 5.2 | 7.8 | 4.4 | 7.2 |
| Surface appearance (center line roughness) | | | $\mu$m | 0.04 | 0.04 | 0.06 | 0.06 | 0.04 | 0.06 |

(*1) Polymerizable prepolymer a: Bismethyl carbonic acid ester of bisphenol A which is obtained by reaction between bisphenol A and dimethyl carbonate (DMC)

(*2) Polymerizable prepolymer b: Bisphenol A

(*3) Polymerizable prepolymer c: Bisphenol A and diethyl carbonate (DEC)

(*4) Mixed by sequential addition: The clay dispersion was gradually and continuously added over time to the polymerizable prepolymer in fused state and mixed.

(*5) Mixing by single addition: The polymerizable prepolymer and the clay dispersion were charged all together and mixed.

(Table 1-3)

| Comparative Examples | | | 1-1 | 1-2 | 1-3 | 1-4 | 1-5 |
|---|---|---|---|---|---|---|---|
| Natural montmorillonite Silane-treated montmorillonite | | g | | 125 | 125 | 125 | |
| Glass fiber | | | | | | | 250 |
| DEC | | | | | | 1000 | |
| PC resin | | | | | | | 2500 |
| Polymerizable prepolymer a(*1) | | | ○ | ○ | ○ | ○ | - |
| Ash content ratio wt% | | | 0 | 4.9 | 4.8 | 4.8 | 4.8 |
| Average layer thickness (*2) | | Å | Not measured | 32,000 | 35,000 | 3600 | Not measured |
| Maximum layer thickness (*3) | | Å | Not measured | 900,000 | 900,000 | 8800 | Not measured |
| Number of dispersed particles | | /wt%·100μ2 | Not measured | | 1 1 | 3 | Not measured |
| Aspect ratio (*4) | | | Not measured | 1.5 | 1.5 | 1.6 | Not measured |
| Flexural strength Flexural modulus | | MPa MPa | 95 2400 | 97 2470 | 97 2480 | 99 2620 | 99 4020 |
| HDT | | °C | 134 | 135 | 135 | 135 | 158 |
| Coefficient of | MD | /°C·$10^{-5}$ | 7.41 | 7.39 | 7.42 | 7.05 | 1.51 |
| linear expansion | TD | /°C·$10^{-5}$ | 7.42 | 7.40 | 7.43 | 7.08 | 15.06 |
| Anisotropy | MD/TD | | 0.999 | 0.999 | 0.999 | 0.996 | 0.100 |
| Warpage | | | small | medium | medium | medium | large |
| Transparency(Haze) | | % | 2.1 | 32.1 | 35.2 | 28.9 | 45.2 |
| Surface appearance (center line roughness) | | μm | 0.020 | 0.806 | 0.812 | 0.668 | 1.506 |

(*1) Polymerizable prepolymer a: Bismethyl carbonic acid ester of bisphenol A which is obtained by reaction between bisphenol A and dimethyl carbonate (DMC)
(*2) This is represented by the numeral average value of the length of the minor axis of the dispersed particle, since it was not dispersed in a plate shape.
(*3) This is represented by the maximum value of the length of the minor axis of the dispersed particles, since it was not dispersed in a plate shape.
(*4) This is represented by ratio of (the length of the major axis)/(the length of the minor axis) of the dispersed particle, since it was not dispersed in a plate shape.

In the following examples, the advantages of the polyarylate resin composition according to the present invention will be described in comparison with Comparative Examples.

(Example 2-1)

Step (A)

3500 g of ion exchanged water and 160 g of natural montmorillonite were mixed by agitation for 5 minutes at 5000 rpm using a wet mill by Nippon Seiki K.K. Then, 30 g of A1110 was added, and by further agitation under the conditions shown in Table 2-1, the silane-treated foliated phyllosilicate was prepared. The confirmation of the silane-treated foliated phyllosilicate was performed by measuring the basal spacing of the separated, dried, and ground solid component by SAXS, and by measuring the absorption bands of functional groups originating from the organo-silane compound in the sample washed with THF by FT-IR. The results are shown in Table 2-1 (The results of Examples 2-2 to 2-5 are also shown in Table 2-1).

30 g of PEGDG was then added, and after another 30 minutes continuous agitation, the sample was dried and powder was obtained. The sample was washed with THF after drying and powdering, and FT-IR measurement was performed, thereby the absorption bands of functional groups originating from ether bond were confirmed.

As the dispersion medium, methylene chloride was used. The above silane-treated foliated phyllosilicate and 14000 mL of methylene chloride were sufficiently mixed by a high-speed agitator (5000 rpm × 30 minutes), whereby a clay dispersion containing the silane-treated foliated phyllosilicate and methylene chloride was prepared. The basal spacing of the silane-treated foliated phyllosilicate in the clay dispersion was >100 Å.

Step (B)

Under a nitrogen atmosphere, 945 g of IPC and 235 g of TPC were dissolved in the above clay dispersion and agitated, thereby obtaining a mixture containing the clay dispersion and an aromatic dicarboxylic acid compound. The mixture was cooled to 5°C.

Step (C)

Under a nitrogen atmosphere, 1280 g of bisphenol A, 41 g of ptBP, 10 g of sodium hyposulfite, and 2870 mL of 5N sodium hydroxide aqueous solution were added in 14000 mL of ion exchanged water and sufficiently mixed, and then the resultant product was cooled to 5 °C, whereby an alkali aqueous solution of a phenol compound was prepared.

Then, under a nitrogen atmosphere, 4000 ml of ion exchanged water and 19 g of benzyltriethylammonium chloride, which is an phase transfer catalyst, were charged in another reaction container which had been separately prepared and cooled to 5°C.

This cooled aqueous solution containing the phase transfer catalyst was agitated at 500 to 800 rpm, into which the above alkali aqueous solution of bisphenol A which had been prepared in advance and the mixture containing the clay dispersion and the aromatic dicarboxylic acid compound, which had been prepared in Step (B), were simultaneously and continuously added together while mixing over about 30 minutes, and then it was agitated for 3 hours. After that, by neutralization, removal of the salts by water washing, and drying, a polyarylate resin composition was obtained, which was evaluated. The results are shown in Table 2-2 (The results of Examples 2-2 to 2-5 are also shown in Table 2-2).

(Example 2-2)

Step (A)

A clay dispersion was prepared similarly to Example 2-1, except that the amount of A1110 was set at 15 g and the amount of PEGDG was set at 15 g. The results are shown in Table 2-1. The basal spacing of the silane-treated foliated phyllosilicate in the clay dispersion was 75 Å.

Steps (B), (C)

Steps (B) and (C) were conducted similarly to Example 1, whereby a polyarylate resin composition was obtained and evaluated.

(Example 2-3)

Step (A)

The clay dispersion was prepared similarly to Example 2-1, except that the amount of A1110 was set at 20 g, and 20 g of A1230 (hydrolyzed at pH 3.0 in advance) was used instead of PEGDG. The results are shown in Table 2-1. The basal spacing of the silane-treated foliated phyllosilicate in the clay dispersion was 69 Å.

Steps (B), (C)

Steps (B) and (C) were conducted similarly to Example 2-1, whereby a polyarylate resin composition was obtained and evaluated.

(Example 2-4)

Step (A)

A clay dispersion was prepared similarly to Example 2-1, except that 180 g of natural bentonite was used instead of natural montmorillonite. The results are shown in Table 2-1. The basal spacing of the silane-treated foliated phyllosilicate in the clay dispersion was >100 Å.

Steps (B), (C)

Steps (B) and (C) were conducted similarly to Example 2-1, whereby a polyarylate resin composition was obtained and evaluated.

(Example 2-5)

Step (A)

3500 g of ion exchanged water and 160 g of natural montmorillonite were mixed by agitation for 5 minutes at 5000 rpm using a wet mill by Nippon Seiki K.K. 45 g of A1230 was then added, and by further agitation under the conditions shown in Table 2-1, the silane-treated foliated phyllosilicate-water dispersion containing the silane-treated foliated phyllosilicate and water was prepared. The prepared silane-treated foliated phyllosilicate-water dispersion was transferred into a first container for addition.

Step (B)

In a second container for addition, under a nitrogen atmosphere, 14000 mL of methylene chloride, 945 g of IPC, and 235 g of TPC were charged and then dissolved and mixed, whereby a methylene chloride solution of aromatic dicarbonic acid was prepared and cooled to 5°C.

In a third container for addition, under a nitrogen atmosphere, 1280 g of bisphenol A, 41 g of ptBP, 10 g of sodium hyposulfite, and 2870 mL of 5N sodium hydroxide aqueous solution were added in 14000 mL of ion exchanged water and sufficiently mixed, and then the resultant product was cooled to 5 °C, whereby an alkali aqueous solution of a phenol compound was prepared.

Then, under a nitrogen atmosphere, 4000 ml of ion exchanged water and 19 g of benzyltriethylammonium chloride, which was a phase transfer catalyst, were charged in an another reaction container which had been prepared separately and cooled to 5°C. This cooled aqueous solution containing the phase transfer catalyst was then agitated at 500 to 800 rpm, into which the methylene chloride solution of aromatic dicarboxylic acid from the second container for addition, and the alkali aqueous solution of phenol compound from the third container for addition are simultaneously and continuously dropped respectively and mixed. Several minutes after the start of the dropping, the silane-treated foliated phyllosilicate-water dispersion from the first container for addition was continuously dropped and mixed. Total dropping time of all the components was over about 3 hours.

Step (C)

After the above dropping, the sample was kept agitated for 3 hours so as to continue polymerization. After that, by neutralization, removal of the salts by water washing, and drying, a polyarylate resin composition was obtained,

which was then evaluated.

(Comparative Example 2-1)

The polyarylate resin was obtained by a method similar to that in Example 2-5, and then evaluated. The results are shown in Table 2-3. (The results of Comparative Examples 2-2 to 2-5 are also shown in Table 2-3)

(Comparative Example 2-2)

160 g of natural montmorillonite and 14000 mL of methylene chloride were agitated and mixed for 30 minutes at 5000 rpm by a high-speed agitator. The polyarylate resin was polymerized similarly to Example 2-1, except that the above mixture was used instead of the clay dispersion.

(Comparative Example 2-3)

By directly mixing 160 g of natural montmorillonite, 30 g of A1110, and 30 g of PEGDG at a room temperature for an hour, the natural montmorillonite was treated. The basal spacing of the silane-treated montmorillonite was 13 Å. The silane-treated montmorillonite and 14000 mL of methylene chloride were agitated and mixed for 30 minutes at 5000 rpm by a high-speed agitator. The polyarylate resin was polymerized similarly to Example 2-1, except that the above mixture was used instead of the clay dispersion.

(Comparative Example 2-4)

768 g of ion exchanged water and 256 g of natural montmorillonite were mixed while applying ultrasonic wave, whereby the natural montmorillonite was swelled.
3700 g of a polyarylate resin polymerized in a method similar to that in Example 2-5 and the above mixture were fused and kneaded under a condition with a temperature of 300 to 320°C and the number of rotations of 350 rpm, using a biaxial extruder (The Nippon Steel Works, Ltd., TEX 44). Volatile moisture was removed through a vent hole under reduced pressure.

(Comparative Example 2-5)

2200 g of a polyarylate resin polymerized in a method similar to that in Example 2-5 and 240 g of glass fiber T195H were fused and kneaded under the same condition as in Comparative Example 2-4.

(Table 2-1)

| Examples | | 2-1 | 2-2 | 2-3 | 2-4 | 2-5 |
|---|---|---|---|---|---|---|
| Ion exchanged water | g | 3500 | 3500 | 3500 | 3500 | 3500 |
| Natural montmorillonite | g | 160 | 160 | 160 | | 160 |
| Natural bentonite | g | | | | 180 | |
| A1110 | g | 30 | 15 | 20 | 30 | |
| A1230 | g | | | 20 | | 45 |
| Agitation rotation | rpm | 5000 | 5000 | 5000 | 5000 | 5000 |
| Agitation time | min. | 60 | 60 | 90 | 60 | 90 |
| Basal spacing of the isolated clay composite | Å | 25 | 22 | 20 | 25 | 22 |

(Table 2-1) (continued)

| Examples | | 2-1 | 2-2 | 2-3 | 2-4 | 2-5 |
|---|---|---|---|---|---|---|
| Functional group measured by FT-IR | | primary amino group, methylene group | primary amino group, methylene group | primary amino group, methylene group, ether group | primary amino group, methylene group | methylene group, ether group |
| PEGDG | g | 30 | 15 | 0 | 30 | 0 |
| Agitation rotation | rpm | 5000 | 5000 | - | 5000 | - |
| Agitation time | min. | 30 | 30 | - | 30 | - |

(Table 2-2)

| Examples | | | 2-1 | 2-2 | 2-3 | 2-4 | 2-5 |
|---|---|---|---|---|---|---|---|
| Step Ion (A) | exchanged water | g | 3500 | 3500 | 3500 | 3500 | 3500 |
| | Natural montmorillonite | g | 160 | 160 | 160 | | 160 |
| | Natural bentonite | g | | | | 180 | |
| | A1110 | g | 30 | 15 | 20 | 30 | |
| | A1230 | g | | | 20 | | 45 |
| | PEGDG | g | 30 | 15 | | 30 | |
| | Methylene chloride | mL | 14000 | 14000 | 14000 | 14000 | |
| | Basal spacing of the silane-treated foliated phyllosilicate in clay dispersion | Å | >100 | 75 | 69 | >100 | >100 |
| Step (B) | Polymerizable IPC<br>prepolymer TPC | g<br>g | 945<br>235 | 945<br>235 | 945<br>235 | 945<br>235 | 945<br>235 |
| | Methylene chloride<br>Bisphenol A<br>ptBP | ml<br>g<br>g | | | | | 14000<br>1280<br>41 |
| Step (C) | Bisphenol A<br>ptBP | g<br>g | 1280<br>41 | 1280<br>41 | 1280<br>41 | 1280<br>41 | |
| | Polymerization method | - | interfacial polycondensation | | | | |
| Mw | | - | 58000 | 58500 | 57500 | 57500 | 57000 |
| Ash content ratio | | wt% | 6.71 | 6.70 | 6.71 | 7.52 | 6.72 |
| Average layer thickness Maximum layer thickness<br>Number of dispersed particles [N]<br>Average aspect ratio | | Å<br>Å<br>particles/ wt%·100 $\mu^2$<br>- | 144<br>478 93<br><br>83 | 214<br>635 86<br><br>66 | 272<br>780 63<br><br>51 | 125<br>450 135<br><br>76 | 286<br>840 60<br><br>48 |
| Flexural strength Flexural modulus | | MPa<br>MPa | 122<br>4050 | 116<br>3850 | 112<br>3520 | 115<br>3780 | 107<br>3500 |

(Table 2-2) (continued)

| Examples | | 2-1 | 2-2 | 2-3 | 2-4 | 2-5 |
|---|---|---|---|---|---|---|
| Warpage | - | small | small | small | small | small |
| Anisotropy (*1) | - | 0.998 | 0.989 | 0.976 | 0.998 | 0.968 |
| Center line average roughness | nm | 22 | 40 | 65 | 21 | 80 |
| Transparency(Haze) | % | 5.3 | 5.6 | 8.5 | 4.8 | 9.2 |

(*1) Linear expansion coefficient along MD direction/ Linear expansion coefficient along TD direction

(Table 2-3)

| Comparative Examples | | 2-1 | 2-2 | 2-3 | 2-4 | 2-5 |
|---|---|---|---|---|---|---|
| Ion exchanged water | g | | | | 768 | |
| Natural montmorillonite | g | | 160 | 160 | 256 | |
| A1110 | g | | | 30 | | |
| PEGDG | g | | | 30 | | |
| Methylene chloride | mL | 14000 | 14000 | 14000 | | |
| Polymerizable prepolymer IPC | g | 945 | 945 | 945 | | |
| Polymerizable prepolymer TPC | g | 235 | 235 | 235 | | |
| Bisphenol A | g | 1280 | 1280 | 1280 | | |
| ptBP | g | 41 | 41 | 41 | | |
| PAR | g | | | | 3700 | 2200 |
| Glass fiber T195H | g | | | | | 240 |
| Production method | - | interfacial polycondensation | | | fusion kneading | |
| Mw | - | 5800 | 58500 | 57500 | 56000 | 57500 |
| Ash content ratio | wt% | 0.00 | 6.70 | 6.70 | 6.50 | 9.84 |
| Average layer thickness | Å | Not measured | 32,000 | 35,000 | 5200 | Not measured |
| Maximum layer thickness | Å | Not measured | 900,000 | 900,000 8500 | | Not measured |
| Number of dispersed particles [N] | particles/ wt%·100$\mu^2$ | Not measured | | 1 1 | 6 | Not measured |
| Average aspect ratio | - | Not measured | 1.5 | 1.5 | 5.3 | Not measured |
| Flexural strength Flexural modulus | MPa MPa | 89 2040 | 90 2080 | 90 2040 | 91 2090 | 125 4040 |
| Warpage | - | small | medium | medium | medium | large |
| Anisotropy | - | 0.998 | 0.998 | 0.998 | 0.997 | 0.113 |
| Center line average roughness | nm | 20 | 806 | 812 | 437 | 1506 |
| Transparency(Haze) | % | 1.9 | 36.7 | 38.9 | 23.9 | 45.2 |

In the following examples, the advantages related to the producing method of the polyester resin composition according to the present invention will be described in comparison with comparative examples.

(Example 3-1)

Step (A)

In 3500 g of ion exchanged water, 150 g of natural montmorillonite was added and mixed by agitation for 5 minutes at 5000 rpm using a wet mill by Nippon Seiki K.K. 10 g of A1120 was then added, and by further agitation under the conditions shown in Table 3-1, a silane-treated foliated phyllosilicate-water dispersion containing a silane-treated foliated phyllosilicate and water was prepared. The confirmation of the silane-treated foliated phyllosilicate was performed by measuring the basal spacing of the separated, dried, and ground solid component by SAXS, and by measuring the absorption bands of functional groups originating from the organo-silane compound in the sample washed with THF by FT-IR. The results of this are shown in Table 3-1 (The results of Examples 3-2 to 3-5 are also shown in Table 3-1).

Step (B)

2500 g of DMT, 1600 g of EG, 7.5 g of hindered phenol-type stabilizer (ADEKA Stab AO60, made by Asahi Denka Kogyo K.K., hereinafter, referred to as A060), and 0.60 g of titanium tetrabutoxide ($Ti(OBu)_4$) were charged in a polymerizer, and then agitated for about 3 hours at a reaction temperature of about 140 to 190°C, thereby transesterifying DMT and EG to obtain an oligomer of PET. The logarithmic viscosity of the obtained oligomer was 0.06 (dl/g).

While agitating the system at 180 rpm, the silane-treated foliated phyllosilicate-water dispersion was gradually added, thereby mixing the oligomer and the silane-treated foliated phyllosilicate-water dispersion. The addition rate was about 1600 g/hour. The evaporating moisture was drawn out of the system.

Step (C)

After completing the addition of silane-treated foliated phyllosilicate-water dispersion, the system was gradually heated to 240°C. After confirming that about 70 to 80% of water contained in the added silane-treated foliated phyllosilicate-water dispersion was drawn out of the system, 0.8 g of antimony trioxide ($Sb_2O_3$) was added, and the temperature was increased to 280°C. After the temperature increase, the pressure in the system was reduced (0.5 to 5.0 torr (0.067 to 0.665 MPc)) and a fusion polycondensation was performed. The polyester resin composition obtained as described above was evaluated. The results are shown in Table 3-2 (The results of Examples 3-2 to 3-5 are also shown in Table 2).

(Example 3-2)

Step (A)

A mixed solvent of 1000 g of ion exchanged water, 1000 g of MeOH, and 150 g of natural montmorillonite were mixed by agitation for 10 minutes at 5000 rpm, using a high-speed agitating homogenizer (Nippon Seiki K.K.). Then, 1500 g of ion exchanged water was added, and the mixture was further agitated for 15 minutes at 5000 rpm using a wet. mill (Nippon Seiki K.K.). 10 g of A1120 was added thereafter, and the mixture was further agitated under the conditions shown in Table 3-1, whereby a silane-treated foliated phyllosilicate-water dispersion which contains a silane-treated foliated phyllosilicate and water was prepared.

Steps (B) and (C) were conducted in a similar manner to those in Example 3-1, whereby a polyester resin composition was obtained and evaluated.

(Example 3-3)

Step(A)

2000 g of ion exchanged water and 150 g of a swellable mica were agitated for 15 minutes at 5000 rpm, using a wet mill (Nippon Seiki K.K.). 16 g of A1120 was added thereafter, and the mixture was agitated under the condition shown in Table 3-1, whereby a silane-treated foliated phyllosilicate-water dispersion containing a silane-treated foliated phyllosilicate and water was prepared.

Steps (B) and (C) were conducted in a similar manner to those in Example 3-1, whereby a polyester resin composition was obtained and evaluated.

(Example 3-4)

Step (A)

Example 3-4 was conducted similarly to Example 3-1, except that 15 g of A1230 (treated at pH 3 in advance) was added instead of A1120.

Steps (B) and (C) were conducted in a similar manner to those in Example 3-1, whereby a polyester resin composition was obtained and evaluated.

(Example 3-5)

Example 3-5 was conducted similarly to Example 3-1, except that 18 g of A174 (treated at pH 3 in advance) was added instead of A1120.

Steps (B) and (C) were conducted in a similar manner to those in Example 3-1, whereby a polyester resin composition was obtained and evaluated.

(Comparative Example 3-1)

10 g of A1120 was directly sprayed to 150 g of natural montmorillonite using a sprayer, and then by mixing for an hour, the montmorillonite was treated with silane. The basal spacing of the silane-treated montmorillonite was 13 Å. This montmorillonite was washed with THF and then subjected to FT-IR measurement. As a result, the absorption bands originating from primary amino group, secondary amino group, and methylene group were observed.

DMT and EG were transesterified in a manner similar to that in Example 3-1. Then, while agitating at 180 rpm, the above-described silane-treated montmorillonite was gradually added and then 0.60 g of $Sb_2O_3$ was added. A fusion polycondensation was conducted at a reaction temperature of 270 to 280°C and under reduced pressure (0.8 to 5.0 torr) and the resultant product was evaluated. The results are shown in Table 3-2.

(Comparative Example 3-2)

Step (A)

A silane-treated foliated phyllosilicate-water dispersion was prepared in a manner similar to that in Example 3-1. 1500 g of EG was then added and mixed sufficiently, and agitated for about 9 hours at a temperature of about 100 to 150°C, thereby evaporating and removing water and preparing a dispersion containing the silane-treated foliated phyllosilicate and EG.

Step (B)

2500 g of DMT, 7.5 g of A060 and 0.60 g of $Ti(OBu)_4$ were charged in a polymerizer, and agitated at a temperature of about 145 to 150°C, thereby dissolving DMT. The above dispersion containing the silane-treated foliated phyllosilicate and EG was then continuously added and mixed. The addition rate was about 1600 g/hour.

Step (C)

After completing the addition of clay dispersion, the system was agitated for about 3 hours at 145 to 190°C. After heating the reaction system to 240°C, 0.8 g of $Sb_2O_3$ was added, and the temperature was further increased to 280°C. After the temperature increase, the pressure in the system was reduced (0.5 to 5.0 torr (0.067 to 0.665 MPa)) and a fusion polycondensation was performed. A resin composition was obtained, which was then evaluated. The results are shown in Table 3-2.

(Example 3-6)

Step (A)

A silane-treated foliated phyllosilicate-water dispersion was prepared similarly to Example 3-1.

Step (B)

3300 g of BHET was charged in a polymerizer, agitated at 150°C under a dry nitrogen flow, and fused. Then, while agitating at 180 rpm, the silane-treated foliated phyllosilicate-water dispersion was gradually added, whereby BHET and the silane-treated foliated phyllosilicate-water dispersion were mixed. The addition rate was about 1600 g/hour. Evaporating water was drawn out of the system.

Step (C)

After completing the addition of silane-treated foliated phyllosilicate-water dispersion, the system was gradually heated to 240°C. After confirming that about 70 to 80% of water contained in the added silane-treated foliated phyllosilicate-water dispersion was drawn out of the system, 7.5 g of AO60 and 0.8 g of $Sb_2O_3$ were charged, and the temperature was further increased to 280°C. After the temperature increase, the pressure in the system was reduced (0.5 to 5.0 torr (0.067 to 0.665 MPa)) and a fusion polycondensation was performed.

The polyester resin composition obtained as described above was evaluated. The results are shown in Table 3-3.

(Comparative Example 3-3)

A dispersion containing a silane-treated foliated phyllosilicate and EG was prepared in a manner similar to that in Comparative Example 3-2.

Using the above dispersion, a polyester resin composition was obtained in a manner similar to that in Example 3-6, which was then evaluated. The results are shown in Table 3-3.

(Example 3-7)

Step (A)

A silane-treated foliated phyllosilicate-water dispersion was prepared similarly to Example 3-1.

Step (B)

2500 g of PET, 600 g of EG, 7.5 g of AO60 were charged in a polymerizer, and agitated for about one hour and thirty minutes at a reaction temperature of 180 to 240°C under a dry nitrogen flow, thereby depolymerizing PET while drawing out an excess EG, and obtaining an oligomer of PET. The logarithmic viscosity of the obtained oligomer was 0.10 (dl/g). While keeping the oligomer at 190 to 210°C and agitating at 100 to 180 rpm, the silane-treated foliated phyllosilicate-water dispersion was gradually added, whereby the oligomer and the silane-treated foliated phyllosilicate-water dispersion were mixed. The addition rate was about 800 g/hour. Evaporating water was drawn out of the system.

Step (C)

After completing the addition of silane-treated foliated phyllosilicate-water dispersion, and confirming that about 70 to 80% of water contained in the added silane-treated foliated phyllosilicate-water dispersion was drawn out of the system, the temperature was increased to 280°C. After the temperature increase, the pressure in the system was reduced (0.5 to 5.0 torr (0.067 to 0.665 MPa)) and a fusion polycondensation was performed. The polyester resin composition obtained as described above was evaluated. The results are shown in Table 3-4.

(Comparative Example 3-4)

A dispersion containing a silane-treated foliated phyllosilicate and EG was prepared in a manner similar to that in Comparative Example 3-2.

Using the above dispersion, a polyester resin composition was obtained in a manner similar to Example 3-7, which was then evaluated. The results are shown in Table 3-4.

(Example 3-8)

Step (A)

A silane-treated foliated phyllosilicate-water dispersion was prepared similarly to Example 3-1.

Step (B)

2200 g of DMT, 1500 g of 1,4-BD, 7.5 g of AO60 and 0.60 g of $Ti(OBu)_4$ were charged in a polymerizer, and agitated for about 3 hours at a reaction temperature of about 140 to 180°C, for transesterifying DMT and 1,4-BD, thereby obtaining an oligomer of PBT. The logarithmic viscosity of the obtained oligomer was 0.08 (dl/g).
While agitating the system at 180 rpm, the silane-treated foliated phyllosilicate-water dispersion was gradually added, thereby mixing the oligomer and the silane-treated foliated phyllosilicate-water dispersion. The addition rate was about 1600 g/hour. Evaporating water was drawn out of the system.

Step (C)

After completing the addition of silane-treated foliated phyllosilicate-water dispersion, the system was gradually heated to 250°C. After confirming that about 70 to 80% of water contained in the added silane-treated foliated phyllosilicate-water dispersion was drawn out of the system, the temperature was further increased to 270°C. After the temperature increase, the pressure in the system was reduced (0.5 to 5.0 torr (0.067 to 0.665 MPa)) and a fusion polycondensation was performed. The polyester resin composition obtained as described above was evaluated. The results are shown in Table 3-5.

(Example 3-9)

Step (A)

A silane-treated foliated phyllosilicate-water dispersion was prepared similarly to Example 3-5.
Steps (B) and (C) were conducted in a similar manner to those in Example 3-8, whereby a polyester resin composition was obtained and evaluated. The results are shown in Table 3-5.

(Comparative Example 3-5)

In a manner similar to that in Example 3-8, DMT and 1,4-BD were transesterified. Then, while agitating at 180 rpm, the silane-treated natural montmorillonite, which was prepared in a manner similar to that in Comparative Example 3-1, was gradually added and then fusion polycondensation was performed at a reaction temperature of 270°C and under reduced pressure (0.8 to 5.0 torr (0.106 to 0.665 MPa)), and the resultant sample was evaluated. The results are shown in Table 3-5.

(Comparative Example 3-6)

A dispersion containing a silane-treated foliated phyllosilicate and 1,4-BD was prepared in a manner similar to that in Comparative Example 3-2, except that 1500 g of 1,4-BD was used instead of EG.
The above-described dispersion was added in a manner similar to that in Example 3-8, whereby a polymerization was performed. The results are shown in Table 3-5.

(Comparative Example 3-7)

2500 g of DMT, 1600 g of EG, 7.5 g of AO60 and 0.60 g of $Ti(OBu)_4$ were charged in a polymerizer, and agitated for about 3 hours at a reaction temperature of about 150 to 190°C, so as to transesterify DMT and ED. 0.60 g of $Sb_2O_3$ was added thereafter, and a fusion polycondensation was performed at a reaction temperature of 270 to 280°C and under reduced pressure (0.8 to 5.0 torr (0.106 to 0.665 MPa)), whereby PET resin was obtained and evaluated. The results are shown in Table 3-6.

(Comparative Example 3-8)

2200 g of DMT, 1500 g of 1,4-BD, 7.5 g of A060 and 0.60 g of $Ti(OBu)_4$ were charged in a polymerizer, and

agitated for about 3 hours at a reaction temperature of about 140 to 180°C, so as to transesterify DMT and 1,4-BD. A fusion polycondensation was performed thereafter at a reaction temperature of 250 to 270°C and under reduced pressure (0.8 to 5.0 torr (0.106 to 0.665 MPa)), whereby PBT resin was obtained and evaluated. The results are shown in Table 3-6.

(Table 3-1)

| Examples | | 3-1 | 3-2 | 3-3 | 3-4 | 3-5 | 3-6 | 3-7 | 3-8 | 3-9 | 3-10 |
|---|---|---|---|---|---|---|---|---|---|---|---|
| Ion exchanged water | g | 3500 | 2500 | 2000 | 3500 | 3500 | 3500 | 3500 | 3500 | 3500 | 3500 |
| MeOH | g | | 1000 | | | | | | | | |
| Natural montmorillonite | g | 150 | 150 | | 150 | 150 | 150 | 150 | 150 | 150 | 150 |
| Swellable mica | g | | | 150 | | | | | | | |
| A1120 | g | 10 | 10 | 15 | | | 10 | 10 | 10 | | 10 |
| A1230 | g | | | | 15 | | | | | | |
| A174 | g | | | | | 18 | | | | 18 | |
| Agitation condition: rotation | rpm | 5000 | 5000 | 6000 | 5000 | 5000 | 5000 | 5000 | 5000 | 5000 | 6000 |
| Agitation condition: time | hr | 0.75 | 0.75 | 1.00 | 0.75 | 1.00 | 0.75 | 0.75 | 0.75 | 1.00 | 1.00 |
| Basal spacing of the isolated clay composite | Å | 26 | 19 | 23 | 24 | 21 | 26 | 26 | 26 | 21 | 26 |
| Functional group measured by FT-IR | | primary amino group, secondary amino group, methylene group | primary amino group, secondary amino group, methylene group | primary amino group, secondary amino group, methylene group | ether group, methylene group | methyl group, vinyl group, carbonyl group | primary amino group, secondary amino group, methylene group | primary amino group, secondary amino group, methylene group | primary amino group, secondary amino group, methylene group | methyl group, vinyl group, carbonyl group | primary amino group, secondary amino group, methylene group |

(Table 3-2)

| Step | Item | Unit | Examples 3-1 | Examples 3-2 | Examples 3-3 | Examples 3-4 | Examples 3-5 | Comparative Examples 3-1 | Comparative Examples 3-2 |
|---|---|---|---|---|---|---|---|---|---|
| Step (A) | Ion exchanged water | g | 3500 | 2500 | 2000 | 3500 | 3500 | | |
| | MeOH | g | | 1000 | | | | | |
| | Natural montmorillonite | g | 150 | 150 | | 150 | 150 | 150 | 150 |
| | Swellable mica | g | | | 150 | | | | |
| | A1120 | g | 10 | 10 | 16 | | | 10 | 10 |
| | A1230 | g | | | | 15 | | | |
| | A174 | g | | | | | 18 | | |
| | EG | g | | | | | | | 1500 |
| Step (B) | Polymerizable prepolymer | (*1) | ○ | ○ | ○ | ○ | ○ | ○ | |
| | DMT | g | | | | | | | 2500 |
| | addition rate of the clay dispersion | g/hour | 1600 | 1600 | 1600 | 1600 | 1600 | – | 1600 |
| Step(C) | | | fusion polycondensation | | | | | | |
| Ash content ratio | | wt% | 5.3 | 5.4 | 5.6 | 5.4 | 5.4 | 5.5 | 5.4 |
| Average layer thickness | | Å | 125 | 321 | 258 | 168 | 210 | 32,000(*2) | 135 |
| Maximum layer thickness | | Å | 410 | 980 | 775 | 467 | 560 | 900,000(*3) | 450 |
| Number of dispersed particles | | /wt%·100 $\mu^2$ | 108 | 54 | 71 | 103 | 85 | 1 | 100 |
| Aspect ratio | | | 148 | 67 | 75 | 116 | 98 | 1.5(*4) | 145 |
| Production time | Step(A) | hr | 0.83 | 1.08 | 1.25 | 0.83 | 1.08 | 1.00 | 10.15 |
| | Step(B) | hr | 4.90 | 4.90 | 4.25 | 4.90 | 4.90 | 3.35 | 4.10 |
| | Step(C) | hr | 2.50 | 2.40 | 2.50 | 2.40 | 2.40 | 2.50 | 2.50 |
| | total | hr | 8.23 | 8.38 | 8.00 | 8.13 | 8.38 | 6.85 | 16.75 |
| Flexural strength | | MPa | 135 | 100 | 110 | 132 | 105 | 97 | 130 |
| Flexural modulus | | MPa | 5750 | 5010 | 5250 | 5680 | 5280 | 3160 | 5650 |
| HDT | | °C | 215 | 195 | 203 | 214 | 205 | 135 | 214 |
| Warpage | | mm | <0.1 | <0.1 | <0.1 | <0.1 | <0.1 | impossible to mold | <0.1 |
| Surface appearance (center line roughness) | | μm | 0.04 | 0.06 | 0.06 | 0.04 | 0.04 | 0.806 | 0.04 |

(*1) Polymerizable prepolymer: A prepolymer obtained by transesterifying reaction of 2500 g of DMT and 1600 g of EG

(*2) This is represented by the numeral average value of the length of the minor axis of the dispersed particle, since it was not dispersed in a plate shape.

(*3) This is represented by the maximum value of the length of the minor axis of the dispersed particle, since it was not dispersed in a plate shape.

(*4) This is represented by ratio of (the length of the major axis)/(the length of the minor axis) of the dispersed particle, since it was not dispersed in a plate shape.

(Table 3-3)

| | | | Example | Comparative Example |
|---|---|---|---|---|
| | | | 3-6 | 3-3 |
| Step (A) | Ion exchanged water | g | 3500 150 | 3500 150 |
| | Natural montmorillonite | | | |
| | A1120 | | 10 | 10 |
| | EG | | | 1500 |
| Step (B) | Polymerizable prepolymer | (*1) | ○ | ○ |
| | Addition rate of the clay dispersion | g/hour | 1600 | 1600 |
| Step(C) | | | fusion polycondensation | |
| Ash content ratio | | wt% | 5.3 | 5.4 |
| Average layer thickness | | Å | 110 | 135 |
| Maximum layer thickness | | Å | 385 | 450 |
| Number of dispersed particles | | /wt% ·100$\mu^2$ | 120 | 100 |
| Aspect ratio | | | 158 | 145 |
| Production time | Step(A) | hr | 0.83 | 10.15 |
| | Step(B) | | 2.15 | 1.35 |
| | Step(C) | | 2.50 | 2.50 |
| | total | | 5.48 | 14.00 |
| Flexural strength | | MPa | 134 | 130 |
| Flexural modulus | | MPa | 5860 | 5800 |
| HDT | | °C | 215 | 214 |
| Warpage | | mm | <0.1 | <0.1 |

(*1) Polymerizable prepolymer: Bis-hydroxyethyl terephthalate

(Table 3-3) (continued)

| | | Example | Comparative Example |
|---|---|---|---|
| | | 3-6 | 3-3 |
| Surface appearance (center line roughness) | µm | 0.04 | 0.04 |

(Table 3-4)

| | | | | Examples | Comparative Example |
|---|---|---|---|---|---|
| | | | | 3-7 | 3-4 |
| Step(A) | Ion exchanged water | | g | 3500 | 3500 |
| | Natural montmorillonite | | | 150 | 150 |
| | A1120 | | | 10 | 10 |
| | EG | | | | 1500 |
| Step(B) | Polymerizable prepolymer | | (*1) | ○ | ○ |
| | Addition rate of the clay dispersion | | g/hour | 1600 | 1600 |
| Step(C) | | | | fusion polycondensation | |
| Ash content ratio | | | wt% | 5.3 | 5.4 |
| Average layer thickness | | | Å | 130 | 135 |
| Maximum layer thickness | | | Å | 450 | 460 |
| Number of dispersed particles | | | /wt% · 100 $\mu^2$ | 100 | 100 |
| Aspect ratio | | | | 135 | 135 |
| Production time | | Step(A) | hr | 0.83 | 10.15 |
| | | Step(B) | | 3.30 | 2.50 |
| | | Step(C) | | 2.50 | 2.50 |
| | | total | | 6.63 | 15.15 |
| Flexural strength | | | MPa | 124 | 120 |
| Flexural modulus | | | MPa | 5560 | 5460 |
| HDT | | | °C | 215 | 214 |
| Warpage | | | mm | <0.1 | <0.1 |
| Surface appearance (center line roughness) | | | µm | 0.04 | 0.04 |

(*1) Polymerizable prepolymer: A prepolymer obtained by depolymerizing 2500 g of PET with 600 g of EG

(Table 3-5)

| | | | Examples | | Comparative Examples | |
|---|---|---|---|---|---|---|
| | | | 3-8 | 3-9 | 3-5 | 3-6 |
| Step (A) | Ion exchanged water | g | 3500 | 3500 | | 3500 |
| | Natural montmorillonite | | 150 | 150 | 150 | 150 |
| | A1120 | | 10 | | 10 | 10 |
| | A174 | | | 18 | | |
| | 1,4-BD | | | | | 1500 |

(Table 3-5) (continued)

| | | | | Examples | | Comparative Examples | |
|---|---|---|---|---|---|---|---|
| | | | | 3-8 | 3-9 | 3-5 | 3-6 |
| Step (B) | Polymerizable prepolymer | | (*1) | ○ | ○ | ○ | ○ |
| | Addition rate of the clay dispersion | | g/hour | 1600 | 1600 | - | 1600 |
| Step(C) | | | | Fusion polycondensation | | | |
| Ash content ratio | | | wt% | 5.3 | 5.4 | 5,5 | 5.4 |
| Average layer thickness | | | Å | 128 | 220 | 31,000 (*2) | 135 |
| Maximum layer thickness | | | Å | 410 | 570 | 900,000 (*3) | 450 |
| Number of dispersed particles | | | /wt%·100μ$^2$ | 112 | 80 | 1 | 100 |
| Aspect ratio | | | | 156 | 95 | 1.5 (*4) | 145 |
| Production time | | Step(A) | hr | 0.83 | 1.08 | 1.00 | 9.10 |
| | | Step(B) | | 4.90 | 4.90 | 3.35 | 4.10 |
| | | Step(C) | | 2.50 | 2.40 | 2.50 | 2.50 |
| | | total | | 8.23 | 8.38 | 6.85 | 15.70 |
| Flexural strength Flexural modulus | | | MPa | 125 | 110 | 86 | 124 |
| | | | MPa | 4010 | 3880 | 2650 | 3990 |
| HDT | | | °C | 198 | 195 | 162 | 197 |
| Warpage | | | mm | <0.1 | <0.1 | 10.5 | <0.1 |
| Surface appearance (center line roughness) | | | μm | 0.04 | 0.06 | 0.821 | 0.04 |

(*1) Polymerizable prepolymer: A prepolymer obtained by transesterifying reaction of 2200 g of DMT and 1500 g of 1,4-BD

(*2) This is represented by the numeral average value of the length of the minor axis of the dispersed particle, since it was not dispersed in a plate shape.

(*3) This is represented by the maximum value of the length of the minor axis of the dispersed particle, since it was not dispersed in a plate shape.

(*4) This is represented by ratio of (the length of the major axis)/(the length of the minor axis) of the dispersed particle, since it was not dispersed in a plate shape.

(Table 3-6)

| | | Comparative Examples | |
|---|---|---|---|
| | | 3-7 | 3-8 |
| | | PET | PBT |
| Average layer thickness | Å | Not measured | |
| Maximum layer thickness | Å | | |
| Number of dispersed particles | /wt%·100μ$^2$ | | |
| Aspect ratio | | | |
| Flexural strength<br>Flexural modulus | MPa<br>MPa | 2970<br>104 | 2610<br>85 |
| HDT | °C | 140 | 160 |
| Warpage | mm | impossible to mold | 10.9 |
| Surface appearance (center line roughness) | μm | 0.02 | 0.02 |

In the following Examples, the advantages regarding the rheology characteristics of the polyester resin composition according to the present invention are described in comparison with comparative examples.

(Example 4-1)

Step (A)

In 3000 g of ion exchanged water, 160 g of natural montmorillonite was added and mixed by agitation for 5 minutes at 5000 rpm, using a wet mill by Nippon Seiki K.K. 10 g of A1120 was then added, and by further agitation under the conditions shown in Table 4-1, a silane-treated foliated phyllosilicate-water dispersion containing a silane-treated foliated phyllosilicate and water was prepared. (The confirmation of silane-treated foliated phyllosilicate was performed by measuring the basal spacing of the separated, dried, and ground solid component by SAXS, and by measuring the absorption bands of functional groups originating from the organo-silane compound in the sample washed with THF by FT-IR. The results are shown in Table 4-1 (The results of Examples 4-2 to 4-6 are also shown in Table 4-1)).

Step (B)

3000 g of BHET was charged in a polymerizer, agitated at 140°C under a dry nitrogen flow, and fused. The system was kept at 140 to 150°C, and then while agitating at 180 rpm, the silane-treated foliated phyllosilicate-water dispersion was gradually added, whereby BHET and the silane-treated foliated phyllosilicate-water dispersion were mixed. The addition rate was about 2500 g/hour. Evaporating water was drawn out of the system.

Step (C)

After completing the addition of silane-treated foliated phyllosilicate-water dispersion, the system was gradually heated to 240°C. After confirming that about 70 to 80% of water contained in the added silane-treated foliated phyllosilicate-water dispersion was drawn out of the system, 0.8 g of antimony trioxide ($Sb_2O_3$) was charged, and the temperature was further increased to 280°C. After the temperature increase, the pressure in the system was reduced (0.5 to 5.0 torr (0.067 to 0.665 MPa)) and a fusion polycondensation was performed. The polyester resin composition obtained as described above was evaluated. The results are shown in Table 4-2 (The results of Examples 4-2 to 4-6 are also shown in 4-2).

(Example 4-2)

Step (A)

A mixture solvent of 2000 g of ion exchanged water and 1000 g of ethylene glycol, and 160 g of natural montmorillonite were mixed by agitation for 30 minutes at 5000 rpm, using a wet mill. 10 g of A1120 was added thereafter, and by a further agitation under the conditions shown in Table 4-1, a silane-treated foliated phyllosilicate-water dispersion containing a silane-treated foliated phyllosilicate and water was prepared.

Steps (B) and (C) were conducted in a similar manner to those in Example 4-1, whereby a polyester resin composition was obtained and evaluated.

(Example 4-3)

Step (A)

1200 g of ion exchanged water and 50 g of natural montmorillonite were mixed by agitation for 5 minutes at 5000 rpm, using a wet mill. 3.5 g of A1120 was added thereafter, and by a further agitation under the conditions shown in Table 4-1, a silane-treated foliated phyllosilicate-water dispersion containing a silane-treated foliated phyllosilicate and water was prepared.

Steps (B) and (C) were conducted in a similar manner to those in Example 4-1, whereby a polyester resin composition was obtained and evaluated.

(Example 4-4)

Example 4-4 was conducted similarly to Example 4-1, except that 10 g of A1230 was used instead of A1120. A polyester resin composition was obtained and evaluated.

(Example 4-5)

Example 4-5 was conducted similarly to Example 4-1, except that 10 g of A187 was used instead of A1120. A polyester resin composition was obtained and evaluated.

(Example 4-6)

Step (A)

3500 g of ion exchanged water and 280 g of natural bentonite were mixed by agitation for 10 minutes at 5000 rpm, using a wet mill. 14 g of A1120 was added thereafter, and by a further agitation under the conditions shown in Table 4-1, a silane-treated foliated phyllosilicate-water dispersion containing a silane-treated foliated phyllosilicate and water was prepared.

Steps (B) and (C) were conducted in a similar manner to those in Example 4-1, whereby a polyester resin composition was obtained and evaluated.

(Comparative Example 4-1)

3000 g of BHET, 7.5 g of AO60 and 0.60 g of $Sb_2O_3$ were added to a reactor, and a fusion polycondensation was performed at a reaction temperature of 270 to 280°C and under reduced pressure (0.8 to 5.0 torr (0.106 to 0.665 MPa)), whereby polyethylene terephthalate resin was polymerized. 2250 g of the obtained polyethylene terephthalate resin and 4.5 g of sodium p-t-butylbenzoate (crystallization nucleating agent) were subjected to fusion kneading using a biaxial extruder (The Nippon Steel Works, Ltd., LABOTEX 30), under the conditions at a set temperature of 260 to 280°C and a rotation of 100 rpm. A polyester resin composition was obtained and it was then evaluated. Under certain injection molding conditions, addition of a nucleating agent for crystallization, which is one of the conventional techniques, did not at all improve the moldability.

The results of the evaluation are shown in Table 4-3 (The results of Comparative Examples 4-2 to 4-7 are also shown in Table 4-3).

(Comparative Example 4-2)

A polyethylene terephthalate resin was polymerized so as to obtain a resin composition by a method similar to that in Example 4-1, except that 160 g of natural montmorillonite was used instead of the silane-treated foliated phyllosilicate-water dispersion. The obtained resin composition was then evaluated. Merely by directly adding natural montmorillonite, the values of $\eta_e$-3$\eta$ , $\Delta\eta_e$, and $J_{e0}{\cdot}\eta_0$ did not fall within a desirable range, since only large particles of natural montmorillonite having a size of the order of 1 μm were dispersed. Therefore, releasability and molding cycle during an injection molding were not improved at all.

(Comparative Example 4-3)

10 g of A1120 was directly sprayed to 160 g of natural montmorillonite using a sprayer, and then by mixing for an hour, the montmorillonite was treated, i.e., the clay layers was not exfoliated but treated as the aggregate (this is referred to as a silane-treated montmorillonite). In the silane-treated montmorillonite, although absorption bands originating from primary amino group, secondary amino group, and methylene group were observed, the basal spacing was 13 Å, which is the same as the initial value. This means that the structure of the silane-treated montmorillonite is different from that of the silane-treated foliated phyllosilicate used in the present invention.

A fusion polycondensation was performed so as to obtain a resin composition in a manner similar to that in Example 4-1, except that the above silane-treated montmorillonite was used instead of the silane-treated foliated phyllosilicate-water dispersion. The obtained resin composition was then evaluated. The values of $\eta_e$-3$\eta$, $\Delta\eta_e$, and $J_{e0}{\cdot}\eta_0$ did not fall within a desirable range, since the silane-treated montmorillonite was dispersed as only large particles in a size of the order of 1 μm. Therefore, releasability and molding cycle during an injection molding were not improved at all.

(Comparative Example 4-4)

160 g of natural montmorillonite was added to 3000 g of EG, and agitated for 15 minutes at 5000 rpm by a wet mill. Since no water was used, the basal spacing of the natural montmorillonite hardly expanded and the layers were not exfoliated. Under that state, 10 g of A1120 was added, and further agitated under the same conditions as

those in Example 4-1, thereby preparing a mixture. In a sample obtained by separating, drying and grinding the solid components from the mixture, absorption bands originating from primary amino group, secondary amino group, and methylene group were observed. The basal spacing, however, was 15 Å, which was substantially the same as the initial value. This means that the structure is different from the structure of the silane-treated foliated phyllosilicate used in the present invention.

A fusion polycondensation was performed so as to obtain a resin composition in a manner similar to that in Example 4-1, except that the above mixture was used instead of the silane-treated foliated phyllosilicate-water dispersion. The obtained resin composition was then evaluated. As a result, the values of $\eta_e$-3$\eta$, $\Delta\eta_e$, and $J_{e0}\cdot\eta_0$ did not fall within a desirable range, since only large particles in a size of the order of 1 μm were dispersed. Therefore, releasability and molding cycle during an injection molding were not improved at all. In addition, due to the large particles, the surface quality was deteriorated.

(Comparative Example 4-5)

160 g of natural montmorillonite was added to 3000 g of EG, and agitated for 15 minutes at 5000 rpm by a wet mill. Since no water was used, the basal spacing of the natural montmorillonite hardly expanded and the layers were not also exfoliated.

The sample obtained by agitating the EG and the natural montmorillonite, 2300 g of DMT, 7.5 g of AO60, 0.65 g of $Ti(OBu)_4$ were charged in a reactor, and agitated for about 3 hours at a reaction temperature of about 190°C, thereby transesterifying DMT and EG. A fusion polycondensation was then performed under the presence of natural montmorillonite at a reaction temperature of 250 to 270°C and under reduced pressure (0.8 to 5.0 torr (0.106 to 0.665 MPa)), whereby a resin composition was obtained, which was then evaluated. By merely mixing natural montmorillonite and EG and polymerization, the values of $\eta_e$-3$\eta$, $\Delta\eta_e$, and $J_{e0}\cdot\eta_0$ did not fall within a desirable range, since only large particles of natural montmorillonite in a size of the order of 1 μm were dispersed. Therefore, releasability and molding cycle during an injection molding were not improved at all.

(Comparative Example 4-6)

2250 g of polyethylene terephthalate resin (obtained by a manner similar to that in Comparative Example 4-1) and 171 g of silane-treated montmorillonite (obtained by a manner similar to that in Comparative Example 4-3) were subjected to fusion kneading using a biaxial extruder (The Nippon Steel Works, Ltd., LABOTEX 30), under conditions in which the set temperature was 260 to 280°C and the rotation was 100 rpm. A resin composition was obtained and the resin composition was then evaluated. Merely by directly kneading the silane-treated montmorillonite, releasability and molding cycle were not improved at all, since only large particles in a size of the order of 1 μm were dispersed.

(Comparative Example 4-7)

840 g of ion exchanged water and 280 g of natural montmorillonite were mixed while applying ultrasonic wave, whereby the natural montmorillonite was swelled.

2250 g of polyethylene terephthalate resin (obtained by a manner similar to that in Comparative Example 4-1) and the above mixture were subjected to a fusion kneading under conditions of a set temperature of 260 to 280°C and a rotation of 350 rpm, using a biaxial extruder with a diameter of 40 mm (The Nippon Steel Works, Ltd., TEX 44). (Volatile moisture was removed through a vent hole under reduced pressure), thereby obtaining a resin composition, which was then evaluated.

As described above, by fusion-kneading natural montmorillonite swelled with water and a resin, the values of $\eta_e$-3$\eta$, $\Delta\eta_e$, and $J_{e0}\cdot\eta_0$ did not fall within a desirable range, since the particles are not dispersed finely and homogeneously. Therefore, releasability and molding cycle during an injection molding were not improved at all.

(Table 4-1)

| Examples | | 4-1 | 4-2 | 4-3 | 4-4 | 4-5 | 4-6 |
|---|---|---|---|---|---|---|---|
| Ion exchanged water | g | 3000 | 2000 | 1200 | 3000 | 3000 | 3500 |
| Ethylene glycol | | | 1000 | | | | |
| Natural montmorillonite | | 160 | 160 | 50 | 160 | 160 | |
| Natural bentonite | | | | | | | 280 |
| A1120 | | 10 | 10 | 3.5 | | | 14 |
| A1230 | | | | | 10 | | |
| A187 | | | | | | 10 | |
| Agitation condition: rotation<br>Agitation condition: time | rpm<br>hr | 5000<br>1.0 | 5000<br>1.5 | 5000<br>1.0 | 6000<br>2.0 | 6000<br>2.0 | 5000<br>1.5 |
| Basal spacing of the isolated clay composite | Å | 26 | 20 | 22 | 21 | 19 | 27 |
| Functional group measured by FT-IR | | primary amino group. secondary amino group, methylene group | primary amino group, secondary amino group, methylene group | primary amino group, secondary amino group, methylene group | primary amino group, secondary amino group, methylene group | epoxy group, ether group, methylene group | primary amino group, secondary amino group, methylene group |

(Table 4-2)

| Examples | | | | 4-1 | 4-2 | 4-3 | 4-4 | 4-5 | 4-6 |
|---|---|---|---|---|---|---|---|---|---|
| Ion exchanged water | | | g | 3000 | 2000 | 1200 | 3000 | 3000 | 3500 |
| Ethylene glycol | | | g | | 1000 | | | | |
| Natural montmorillonite | | | g | 160 | 160 | 50 | 160 | 160 | |
| Natural bentonite | | | g | | | | | | 280 |
| A1120 | | | g | 10 | 10 | 3.5 | | | 14 |
| A1230 | | | g | | | | 10 | | |
| A187 | | | g | | | | | 10 | |
| Polymerizable prepolymer(BHET)(*1) | | | g | 3000 | 3000 | 3000 | 3000 | 3000 | 3000 |
| Addition rate of water dispersion | | | g/h | 2500 | 2000 | 2500 | 2000 | 1400 | 1400 |
| Polymerization | | | | fusion polycondensation | | | | | |
| Logarithmic viscosity | | | g/dl | 0.58 | 0.60 | 0.61 | 0.61 | 0.59 | 0.54 |
| Ash content ratio | | | wt% | 6.58 | 6.57 | 2.16 | 6.58 | 6.65 | 10.25 |
| $Je_0 \cdot \eta_0$ | | | sec. | 2.5 | 1.1 | 1.0 | 2.2 | 2.0 | 3.2 |
| $\eta_0 - 3\eta$ | | | Pa·s | 2477 | 1135 | 824 | 2277 | 2050 | 3099 |
| $\Delta\eta_0$ | | | Pa·s | 2340 | 989 | 756 | 2200 | 1980 | 3125 |
| Releasability | mold | 60°C | — | ○ | ○ | ○ | ○ | ○ | ○ |
| | | 80°C | — | ○ | △ | ○ | ○ | ○ | ○ |
| | | 100°C | — | ○ | △ | ○ | ○ | ○ | ○ |
| | | 120°C | — | ○ | ○ | ○ | ○ | ○ | ○ |
| Cooling time | mold | 60°C | sec. | 10 | 18 | 15 | 10 | 11 | 8 |
| | | 80°C | sec. | 10 | 22 | 16 | 10 | 11 | 9 |
| | | 100°C | sec. | 10 | 22 | 17 | 10 | 11 | 9 |
| | | 120°C | sec. | 10 | 20 | 15 | 10 | 11 | 8 |
| Center line average roughness | | | nm | 22 | 85 | 18 | 22 | 22 | 32 |
| Number of dispersed particles [N] | | | particles/wt%·100 $\mu^2$ | 132 | 30 | 140 | 122 | 115 | 198 |
| Average aspect ratio | | | — | 143 | 35 | 161 | 133 | 106 | 89 |
| Average layer thickness | | | Å | 75 | 390 | 70 | 84 | 105 | 60 |
| Maximum layer thickness | | | Å | 300 | 1350 | 280 | 350 | 350 | 240 |

(*1): BHET: Bis-hydroxyethylterephthalate

(Table 4-3)

| Comparative Examples | | 4-1 | 4-2 | 4-3 | 4-4 | 4-5 | 4-6 | 4-7 |
|---|---|---|---|---|---|---|---|---|
| Ion exchanged water | g | | | | | | | 840 |
| Ethylene glycol | g | | | | 3000 | 3000 | | |
| Natural montmorillonite | g | | 160 | 160 | 160 | 160 | 160 | 280 |
| A1120 | g | | | 10 | 10 | | 10 | |
| Polymerizable prepolymer(BHET)(*1) | g | | 3000 | 3000 | 3000 | | | |
| Polymerizable prepolymer(DMT)(*2) | g | | | | | 2400 | | |
| Polyethylene terephthalate (*3) | g | 2250 | | | | | 2250 | 3900 |
| Crystallization nucleating agent(*4) | g | 4.5 | | | | | | |
| Production method | | fusion kneading | | | | | fusion kneading | |

(Table 4-3)(continued)

| Comparative Examples | | | 4-1 | 4-2 | 4-3 | 4-4 | 4-5 | 4-6 | 4-7 |
|---|---|---|---|---|---|---|---|---|---|
| Logarithmic viscosity | | g/dl | 0.62 | 0.62 | 0.63 | 0.62 | 0.63 | 0.62 | 0.62 |
| Ash content ratio | | wt% | 0.00 | 6.57 | 6.58 | 6.55 | 6.57 | 6.62 | 6.64 |
| $Je_0 \cdot \eta_0$ | | sec. | 0.20 | 0.21 | 0.21 | 0.23 | 0.21 | 0.20 | 0.20 |
| $\eta_0 - 3\eta$ | | Pa·s | 175 | 182 | 186 | 185 | 180 | 176 | 185 |
| $\Delta\eta_0$ | | Pa·s | 244 | 250 | 248 | 256 | 249 | 228 | 236 |
| Releasability | mold 60°C | — | ○ | × | × | △ | △ | × | × |
| | 80°C | — | △ | × | × | × | × | × | × |
| | 100°C | — | × | × | × | × | × | × | × |
| | 120°C | — | ○ | × | × | × | × | × | × |
| Cooling time | mold 60°C | sec. | 35 | impossible to mold | impossible to mold | 45 | 46 | impossible to mold | impossible to mold |
| | 80°C | sec. | 50 | impossible to mold | impossible to mold | impossible to mold | impossible to mold | impossible to mold | impossible to mold |
| | 100°C | sec. | impossible to mold | impossible to mold | impossible to mold | impossible to mold | impossible to mold | impossible to mold | impossible to mold |
| | 120°C | sec. | 35 | impossible to mold | impossible to mold | impossible to mold | impossible to mold | impossible to mold | impossible to mold |
| Center line average roughness | | nm | 20 | 806 | 750 | 668 | 670 | 660 | 668 |
| Number of dispersed particles[N] | | particles/wt%·100$\mu^2$ | Not measured | 1 | 1 | 3 | 3 | 1 | 10 |
| Average aspect ratio (*5) | | — | Not measured | 1.5 | 1.5 | 1.6 | 1.5 | 1.5 | 2.5 |
| Average layer thickness (*6) | | Å | Not measured | 32,000 | 33,000 | 9800 | 9900 | 30,000 | 2800 |
| Maximum layer thickness (*7) | | Å | Not measured | 900,000 | 930,000 | 25,000 | 26,000 | 900,000 | 8100 |

(*1): BHET: Bis-hydroxyethylterephthalate

(*2): DMT: Dimethyl phthalate

(*3): Polyethylene terephthalate resin polymerized in a similar manner to that in Comparative Example 1

(*4): Sodium p-t-butyl-benzoate

(*5): This is represented by ratio of (the length of the major axis)/(the length of the minor axis) of the dispersed particle, since it was not dispersed in a plate shape.

(*6): This is represented by the numeral average value of the length of the minor axis of the dispersed particle, since it was not dispersed in a plate shape.

(*7) This is represented by the maximum value of the length of the minor axis of the dispersed particle, since it was not dispersed in a plate shape.

INDUSTRIAL APPLICABILITY

As described above in detail, according to the present invention, a silane-treated foliated phyllosilicate is obtained by introducing organo-silane compound into a swellable silicate in order to separate and exfoliate the unit layers of the swellable silicate and then fractionate the aggregating particles of the swellable silicate into a large number of submicroscopic thin plate-like layers. This makes it possible to bring the average layer thickness of the silane-treated foliated phyllosilicate to 500 Å or less, or to bring the maximum layer thickness to 2000 Å or less if necessary, or to bring the average aspect ratio (layer length/layer thickness ratio) to 10 to 300 as well as bringing the number of the particles per unit ratio ([N] value) of silane-treated foliated phyllosilicate contained in an area of 100 $\mu m^2$ to 30 or more.

According to the present invention, in the case of polycarbonate resin, effects on improvement in mechanical properties and deflection temperature under load and suppression of anisotropy are efficiently achieved without adversely affecting the transparency and surface appearance. In the case of polyarylate resin, effects on rigidity and reduction of warpage are efficiently achieved without damaging the transparency and surface smoothness. In the case of thermoplastic polyester resin composition, effects on improvement in mechanical properties, heat resistance and dimensional stability are efficiently achieved without damaging surface quality.

Furthermore, in the case of thermoplastic polyester resin, effects on improvement of molding conditions such as cooling time and mold temperature, and improvement in releasability and molding cycle are efficiently achieved by giving a predetermined rheologic property.

**Claims**

**1.** A resin composition comprising a resin and a silane-treated foliated phyllosilicate,

wherein the resin is selected from the group consisting of polycarbonate, polyarylate, and thermoplastic polyester, and the silane-treated foliated phyllosilicate is prepared by introducing an organo-silane compound represented by a general formula (1):

$$Y_nSiX_{4-n} \quad (1)$$

(where n is an integer from 0 to 3; Y is a hydrocarbon group with 1 to 25 carbons; the hydrocarbon group may have a substituent(s); X is a hydrolyzable group or hydroxyl group; n Ys may be the same type or different

types; and (4-n) Xs may be the same type or different types) into a swellable silicate, and wherein at least one of the following conditions (a) and (b) is satisfied:

(a) an average layer thickness of the silane-treated foliated phyllosilicate is 500 Å or less; and
(b) [N] value is 30 or more (where the [N] value is defined as the number of particles per a unit weight ratio of the silane-treated foliated phyllosilicate contained in an area of 100 $\mu m^2$ of the resin composition) and an average aspect ratio is 10 to 300 (where the average aspect ratio is defined as an average of a ratio of a layer length to a layer thickness of the silane-treated foliated phyllosilicate),

and wherein in the case where the resin is a thermoplastic polyester, at least one of the following conditions (i) to (iii) is further satisfied:

(i) a difference ($\eta_e$-3$\eta$) between an extensional viscosity $\eta_e$ and the triple value of a shear viscosity $\eta$ of the resin composition is 300 Pa's or more at a temperature of 280°C and a rate of strain of 100 (1/s);
(ii) between a rate of strain of 100 (1/s) and a rate of strain of 1000 (1/s), a difference ($\Delta\eta_e$) of values of the extensional viscosity $\eta_e$ of the resin composition at a temperature of 280°C is 500 Pa·s or more; and
(iii) a product $J_{e0}\eta_0$ of equilibrium compliance $J_{e0}$ and zero shear viscosity $\eta_0$ of the resin composition at a temperature of 280°C is 0.8 seconds or more.

**2.** A resin composition according to claim 1, wherein the resin is a polycarbonate.

**3.** A resin composition according to claim 1, wherein the resin is a polyarylate.

**4.** A resin composition according to claim 1, wherein the resin is a thermoplastic polyester.

**5.** A resin composition according to claim 4, wherein all the conditions (i) to (iii) are satisfied.

**6.** A resin composition according to claim 1, wherein the average layer thickness of the silane-treated foliated phyllosilicate is 500 Å or less and the maximum layer thickness is 2000 Å or less.

**7.** A resin composition according to claim 6, wherein the [N] value is 30 or more.

**8.** A resin composition according to claim 6, wherein the average aspect ratio is 10 to 300.

**9.** A method for producing a resin composition according to claim 1, comprising the steps of:

(A) preparing a clay dispersion including the silane-treated foliated phyllosilicate and a dispersion medium;
(B) mixing a polymerizable prepolymer and the clay dispersion; and
(C) forming the resin by polymerizing the polymerizable prepolymer,

wherein, in the case where the resin is a thermoplastic polyester, the clay dispersion comprises a dispersion medium containing water in the step (A).

**10.** A producing method according to claim 9, wherein a basal spacing of silane-treated foliated phyllosilicate of the clay dispersion prepared in the step (A) is the three times or more larger than the initial basal spacing of the swellable silicate.

**11.** A resin composition according to claim 1, wherein the resin composition is for an injection molding.

**12.** A resin composition according to claim 11, wherein the resin is a thermoplastic polyester.

## INTERNATIONAL SEARCH REPORT

International application No.
PCT/JP99/05627

**A. CLASSIFICATION OF SUBJECT MATTER**
Int.Cl⁷ C08L67/00, C08G63/78, C08G64/20, C08K3/34, C08L69/00

According to International Patent Classification (IPC) or to both national classification and IPC

**B. FIELDS SEARCHED**
Minimum documentation searched (classification system followed by classification symbols)
Int.Cl⁷ C08G63/78-63/87, C08G64/20-64/38, C08K3/34, C08L67/00-67/04, C08L69/00

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| A | JP, 9-118792, A (Mitsubishi Chemical Corporation), 06 May, 1997 (06.05.97), page 2, left column, lines 2-10; page 2, right column, line 47 to page 3, left column, line 24, (Family: none) | 1-12 |
| A | JP, 6-89236, B2 (Toray Industries, Inc.), 09 November, 1994 (09.11.94), page 1, left column, lines 2- 9; page 3, left column, lines 28-35 (Family: none) | 1-12 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>07 January, 2000 (07.01.00) | Date of mailing of the international search report<br>18 January, 2000 (18.01.00) |
| Name and mailing address of the ISA/<br>Japanese Patent Office<br><br>Facsimile No. | Authorized officer<br><br>Telephone No. |

Form PCT/ISA/210 (second sheet) (July 1992)